(19) **Europäisches Patentamt**
**European Patent Office**
**Office européen des brevets**

(11) **EP 4 422 093 A1**

(12) **EUROPEAN PATENT APPLICATION**
published in accordance with Art. 153(4) EPC

(43) Date of publication:
**28.08.2024 Bulletin 2024/35**

(21) Application number: **22891738.1**

(22) Date of filing: **14.10.2022**

(51) International Patent Classification (IPC):
***H04B 17/30*** (2015.01)

(52) Cooperative Patent Classification (CPC):
**H04B 17/30**

(86) International application number:
**PCT/CN2022/125480**

(87) International publication number:
**WO 2023/082941 (19.05.2023 Gazette 2023/20)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **11.11.2021 CN 202111335100**

(71) Applicant: **Huawei Technologies Co., Ltd.**
**Shenzhen, Guangdong 518129 (CN)**

(72) Inventors:
• **NI, Rui**
**Shenzhen, Guangdong 518129 (CN)**
• **YANG, Ganghua**
**Shenzhen, Guangdong 518129 (CN)**
• **ZHU, Qian**
**Shenzhen, Guangdong 518129 (CN)**

(74) Representative: **Maiwald GmbH**
**Engineering**
**Elisenhof**
**Elisenstrasse 3**
**80335 München (DE)**

(54) **COMMUNICATION METHOD AND APPARATUS BASED ON TIME REVERSAL**

(57) This application relates to the communication field, and discloses a time reversal-based communication method and apparatus, so as to improve an application scope of time reversal-based communication and reduce a performance requirement of time reversal-based communication on a signal processing component. The method includes: A first device receives first time reversal detection signals from a second device in M spatial channels from a first direction, a second direction, and a third direction, where M is a quantity of spatial channels on which the first device is capable of working, and the first direction, the second direction, and the third direction are perpendicular to each other. The first device determines N1 spatial channels in the M spatial channels based on the first time reversal detection signals. The first device communicates with the second device based on N1 first time reversal vector sequences through the N1 spatial channels, where the N1 first time reversal vector sequences are determined by the first device based on the first time reversal detection signals received in the N1 spatial channels from the first direction, the second direction, and the third direction.

FIG. 5

**EP 4 422 093 A1**

**Description**

**CROSS-REFERENCE TO RELATED APPLICATIONS**

This application claims priority to Chinese Patent Application No. 202111335100.6, filed with the China National Intellectual Property Administration on November 11, 2021 and entitled "TIME REVERSAL-BASED COMMUNICATION METHOD AND APPARATUS", which is incorporated herein by reference in its entirety.

**TECHNICAL FIELD**

Embodiments of this application relate to the field of communication technologies, and in particular, to a time reversal-based communication method and apparatus.

**BACKGROUND**

Time reversal (time reversal, TR) is a wireless transmission technology that uses a time reversal channel impulse response (channel impulse response, CIR) as a linear filter for transmitting a signal, to implement a time-space focusing feature of the signal at a target receiving point. A "time focusing" feature of the time reversal means that maximum energy of a time reversal signal subject to multipath transmission in a complex medium reaches the target receiving point at the same time, so as to implement time-based radio signal energy focusing. A "space focusing" feature of the time reversal means that a time reversal signal adaptively focuses on a location of the target receiving point without any prior knowledge of the target receiving point, so as to implement space-based radio signal energy focusing.

The time reversal technology can automatically adapt to various complex wireless transmission environments without complex multipath signal combination and adaptive algorithms. This can simplify a design of a transceiver. In addition, the time reversal technology can not only suppress multipath fading, but also fully utilize multipath energy to improve a signal-to-noise ratio, reduce intersymbol interference, and improve a communication capacity of wireless communication.

However, currently, the time reversal technology is mainly combined with an ultra-wideband (ultra-wideband, UWB) technology for wireless communication, and a feature that a UWB slot is short is used to identify abundant spatial multipath channels, to support a time reversal-based operation. Time reversal-based communication has a small application scope, and the UWB slot is short. Therefore, a device needs to use an analog-to-digital converter (analog-to-digital converter, ADC), a digital-to-analog converter (digital-to-analog converter, DAC), or another component with a high sampling rate for signal processing. This is difficult to implement, and high costs and power consumption are high.

**SUMMARY**

Embodiments of this application provide a time reversal-based communication method and apparatus, so as to improve an application scope of time reversal-based communication, and reduce a performance requirement of time reversal-based communication on a signal processing component.

According to a first aspect, an embodiment of this application provides a communication method. The method includes: A first device receives first time reversal detection signals from a second device in M spatial channels from a first direction, a second direction, and a third direction, where M is a quantity of spatial channels on which the first device is capable of working, the first direction, the second direction, and the third direction are perpendicular to each other, and M is a positive integer. The first device determines N1 spatial channels in the M spatial channels based on the first time reversal detection signals, where N1 is a positive integer less than or equal to M. The first device communicates with the second device based on N1 first time reversal vector sequences through the N1 spatial channels, where the N1 first time reversal vector sequences are determined by the first device based on the first time reversal detection signals received in the N1 spatial channels from the first direction, the second direction, and the third direction. Optionally, energy of the first time reversal detection signals received through the N1 spatial channels is greater than or equal to a first threshold.

The communication method may be performed by the first device, or may be performed by a component (for example, a processor, a chip, or a chip system) of the first device, may be implemented by a logical module or software that can implement all or some functions of the first device. The first device may be a network device, and the second device may be a terminal device; the first device may be a terminal device, and the second device may be a network device; or the first device may be a terminal device (a first terminal device), and the second device is another terminal device (a second terminal device) different from the first device.

By using the foregoing method, for one spatial channel, the first device may receive time reversal detection signals from different spatial dimensions (three directions), and reverse a sampling result of the time reversal detection signals based on a sequence in which the time reversal detection signals arrive at the first device, to determine a time reversal vector sequence. A capability of the first device to distinguish between radio channels in a propagation environment is increased, so that an effect of identifying more abundant spatial multipath channels can be achieved, and a time reversal operation can be performed more precisely, so that time reversal-based communication does not need to be strongly coupled with a UWB. For example, when a low frequency band (for example, 2.4/3.5/5.0 GHz) and a narrow bandwidth (for example, 20/40/80 MHz) may be used in a non line of sight (non line of sight, NLOS) channel in an indoor environment, a time reversal technology may be used to implement stable and reliable wireless communication, so that an application scope of time reversal-based communication can be extended, and there is no need for time reversal-based communication to be strongly coupled to the UWB, and a performance requirement of time reversal-based communication on a signal processing component can also be reduced.

In addition, by using the foregoing method, the first device may select N1 spatial channels (for example, N1 spatial channels through which time reversal detection signals of high energy are received) from the M available spatial channels for communication with the second device, and close other spatial channels, so that power consumption of the first device can be effectively reduced without significantly affecting receiving and sending performance.

In a possible design, that a first device receives first time reversal detection signals from a second device in M spatial channels from a first direction, a second direction, and a third direction includes: The first device receives, in the M spatial channels, the first time reversal detection signals from the first direction by using a horizontal electric dipole, from the second direction by using a vertical electric dipole, and from the third direction by using a flux ring. Optionally, the horizontal electric dipole and the vertical electric dipole are vertically crossed, and the flux ring surrounds a periphery of the horizontal electric dipole and a periphery of the vertical electric dipole.

In the foregoing design, different polarization manners may be used to receive a time reversal detection signal, so that a dimension of detecting the time reversal detection signal may be extended.

In a possible design, the method further includes: receiving second time reversal detection signals from the second device from the first direction, the second direction, and the third direction; and the first device updates the N1 first time reversal vector sequences based on N1 second time reversal vector sequences and a weighting factor, where the N1 second time reversal vector sequences are determined by the first device based on the second time reversal detection signals received in the N1 spatial channels from the first direction, the second direction, and the third direction.

In the foregoing design, time reversal vector sequences determined at different time may be weighted and combined for iteration, so that mobility support of time reversal wireless communication for the terminal device is enhanced, and an adaptability to a change of an object around a propagation environment is enhanced. In addition, because a time reversal process of iterative execution is equivalent to performing a singular value decomposition (singular value decomposition, SVD) operation on iteration of a wireless channel, a feature matching effect on a wireless channel spatial filter is enhanced, and a wireless communication capacity is further improved.

In a possible design, that the first device communicates with the second device based on N1 first time reversal vector sequences through the N1 spatial channels includes: The first device sends a first data signal and a third time reversal detection signal to the second device based on the N1 first time reversal vector sequences through the N1 spatial channels.

In a possible design, the first data signal and the third time reversal detection signal are in a same radio frame. In an example, the third time reversal detection signal may be in a frame header part of the radio frame, and the first data signal may be in a payload part of the radio frame.

In the foregoing design, a frame structure with both the time reversal detection signal and the data signal is provided, so that a detection phase and a communication phase of time reversal can be combined into one phase, so as to shorten a delay of time reversal-based communication.

In a possible design, the method further includes: The first device adjusts a working state of one or more control boards when N1 is less than or equal to a second threshold.

In the foregoing design, the first device may perform coarse-grained control on a large time scale, multipath channel path selection, and signal path propagation loss by adjusting a working state like a location, a quantity of array elements, a directivity pattern, or passive reflection or active reflection, of the one or more control boards, so that the first device can process a signal from the second device in a sufficient quantity of spatial channels (channel paths), so as to improve communication robustness.

In a possible design, the method further includes: The first device receives first indication information from the second device, where the first indication information indicates that a spatial location of the second device changes, and/or a received signal-to-noise ratio of communication between the second device and the first device is less than a third threshold. The first device receives second time reversal detection signals from the second device in the M spatial channels from the first direction, the second direction, and the third direction. The first device determines N2 spatial channels in the M spatial channels based on the second time reversal detection signals, where N2 is a positive integer less than or equal to M. The first device communicates with the second device based on N2 second time reversal vector sequences through the N2 spatial channels, where the N2 second time reversal vector sequences are determined by the first device based on the second time reversal detection signals received in the N2 spatial channels from the first direction, the second direction, and the third direction.

In the foregoing design, when the spatial location of the second device changes, and/or the received signal-to-noise ratio of communication between the second device and the first device is less than the third threshold, the first device may re-determine the spatial channel and the time reversal vector sequence that are used for communication with the second device. This helps improve communication robustness.

In a possible design, the method further includes: The first device determines N3 spatial channels that are an intersection between the N2 spatial channels and the N1 spatial channels. The first device updates, based on N3 first time reversal vector sequences corresponding to the N3 spatial channels and a weighting factor, N3 second time reversal vector sequences corresponding to the N3 spatial channels.

In the foregoing design, time reversal vector sequences determined at different time are weighted and combined for iteration, so that mobility support of time reversal-based communication for the terminal device is enhanced, and an adaptability to a change of an object around a propagation environment is enhanced.

In a possible design, the method further includes: The first device receives first indication information from the second device, where the first indication information indicates that a received signal-to-noise ratio of communication between the second device and the first device is less than a third threshold. The first device receives second time reversal detection signals from the second device in N2 spatial channels from the first direction, the second direction, and the third direction, where the N2 spatial channels include the N1 spatial channels, N2 is greater than N1, and N2 is a positive integer less than or equal to M. The first device communicates with the second device based on N2 second time reversal vector sequences through the N2 spatial channels, where the N2 second time reversal vector sequences are determined by the first device based on the second time reversal detection signals received in the N2 spatial channels from the first direction, the second direction, and the third direction. Optionally, the method further includes: The first device updates, based on the N1 first time reversal vector sequences corresponding to the N1 spatial channels and a weighting factor, N1 second time reversal vector sequences corresponding to the N1 spatial channels.

In the foregoing design, when the received signal-to-noise ratio of communication between the second device and the first device is less than the third threshold, a quantity of spatial channels used for communication between the first device and the second device may be increased. This helps improve the received signal-to-noise ratio of communication between the second device and the first device.

According to a second aspect, an embodiment of this application provides a communication method. The method includes: A second device sends a first time reversal detection signal to a first device. The second device sends a second time reversal detection signal to the first device when a first condition is met, where the first condition includes one or more of the following: a spatial location of the second device changes; a received signal-to-noise ratio of communication between the second device and the first device is less than a third threshold; or duration after the second device sends the first time reversal detection signal reaches one time reversal detection signal sending cycle.

The communication method may be performed by the second device, or may be performed by a component (for example, a processor, a chip, or a chip system) of the second device, may be implemented by a logical module or software that can implement all or some functions of the second device. The first device may be a network device, and the second device may be a terminal device; the first device may be a terminal device, and the second device may be a network device; or the first device may be a terminal device (a first terminal device), and the second device is another terminal device (a second terminal device) different from the first device.

By using the foregoing method, when the second device satisfies any one or more of the following: the spatial location changes, or the received signal-to-noise ratio of communication with the first device is lower than the third threshold, or the duration after the time reversal detection signal is sent reaches one time reversal detection signal sending cycle, the second device re-sends the time reversal detection signal to the first device. This helps the first device perform weighting and combination on time reversal vector sequences determined at different time for iteration, and enhances an adaptability of time reversal communication to a change of an object around a propagation environment.

In a possible design, the method further includes: The second device sends first indication information to the first device, where the first indication information indicates the first condition that is met when the second device sends the second time reversal detection signal.

In the foregoing design, the second device may send, to the first device, information such as that the spatial location of the second device changes, or the received signal-to-noise ratio of communication with the first device is lower than the third threshold, so that the first device may adjust, based on a communication status of the second device, a quantity of spatial channels used for communication with the second device, and the like. This helps improve robustness of time reversal-based communication.

According to a third aspect, an embodiment of this application provides a communication apparatus. The communication apparatus may include an interface unit and a processing unit. The interface unit is configured to receive first time reversal detection signals from a second device in M spatial channels from a first direction, a second direction, and a third direction, where M is a quantity of spatial channels on which the communication apparatus is capable of working, the first direction, the second direction, and the third direction are perpendicular to each other, and M is a positive integer. The processing unit is configured to determine N1 spatial channels in the M spatial channels based on the first time reversal detection signals, where N1 is a positive integer less than or equal to M. The interface unit is further configured to communicate with the second device through the N1 spatial channels based on N1 first time reversal vector sequences, where the N1 first time reversal vector sequences are determined by the interface unit based on the first time reversal detection signals received in the N1 spatial channels from the first direction, the second direction, and the third direction.

In a possible design, energy of the first time reversal detection signals received through the N1 spatial channels is greater than or equal to a first threshold.

In a possible design, when receiving the first time reversal detection signals from the second device in the M spatial channels from the first direction, the second direction, and the third direction, the interface unit is specifically configured to receive, in the M spatial channels, the first time reversal detection signals from the first direction by using a horizontal electric dipole, from the second direction by using a vertical electric dipole, and from the third direction by using a flux ring.

In a possible design, the horizontal electric dipole and the vertical electric dipole are vertically crossed, and the flux ring surrounds a periphery of the horizontal electric dipole and a periphery of the vertical electric dipole.

In a possible design, the interface unit is further configured to receive second time reversal detection signals from the second device in the N1 spatial channels from the first direction, the second direction, and the third direction. The processing unit is further configured to update the N1 first time reversal vector sequences based on N1 second time reversal vector sequences and a weighting factor, where the N1 second time reversal vector sequences are determined by the interface unit based on the second time reversal detection signals received in the N1 spatial channels from the first direction, the second direction, and the third direction.

In a possible design, when communicating with the second device based on the N1 first time reversal vector sequences through the N1 spatial channels, the interface unit is specifically configured to send a first data signal and a third time reversal detection signal to the second device based on the N1 first time reversal vector sequences through the N1 spatial channels. Optionally, the first data signal and the third time reversal detection signal are in a same radio frame.

In a possible design, the processing unit is further configured to adjust a working state of one or more control boards when N1 is less than or equal to a second threshold.

In a possible design, the interface unit is further configured to: receive first indication information from the second device, where the first indication information indicates that a spatial location of the second device changes, and/or a received signal-to-noise ratio of communication between the second device and the communication apparatus is lower than a third threshold; and receive second time reversal detection signals from the second device in the M spatial channels from the first direction, the second direction, and the third direction. The processing unit is further configured to determine N2 spatial channels in the M spatial channels based on the second time reversal detection signals, where N2 is a positive integer less than or equal to M. The interface unit is further configured to communicate with the second device through the N2 spatial channels based on N2 second time reversal vector sequences, where the N2 second time reversal vector sequences are determined by the interface unit based on the second time reversal detection signals received in the N2 spatial channels from the first direction, the second direction, and the third direction.

In a possible design, the processing unit is further configured to: determine N3 spatial channels that are an intersection between the N2 spatial channels and the N1 spatial channels; and update, based on N3 first time reversal vector sequences corresponding to the N3 spatial channels and a weighting factor, N3 second time reversal vector sequences corresponding to the N3 spatial channels.

In a possible design, the interface unit is further configured to: receive first indication information from the second device, where the first indication information indicates that a received signal-to-noise ratio of communication between the second device and the communication apparatus is less than a third threshold; and receive second time reversal detection signals from the second device in N2 spatial channels from the first direction, the second direction, and the third direction, where the N2 spatial channels include the N1 spatial channels, N2 is greater than N1, and N2 is a positive integer less than or equal to M. The interface unit is further configured to communicate with the second device through the N2 spatial channels based on N2 second time reversal vector sequences, where the N2 second time reversal vector sequences are determined by the interface unit based on the second time reversal detection signals received in the N2 spatial channels from the first direction, the second direction, and the third direction.

In a possible design, the processing unit is further configured to update, based on the N1 first time reversal vector sequences corresponding to the N1 spatial channels and a weighting factor, N1 second time reversal vector sequences corresponding to the N1 spatial channels.

In a possible design, the communication apparatus is a network device, and the second device is a terminal device; the communication apparatus is a terminal device, and the second device is a network device; or the communication apparatus is a first terminal device, and the second device is a second terminal device different from the first terminal device.

According to a fourth aspect, an embodiment of this application provides a communication apparatus. The communication apparatus may include an interface unit and a processing unit. The interface unit is configured to send a first time reversal detection signal to a first device. When the processing unit determines that a first condition is met, the interface unit sends a second time reversal detection signal to the first device, where the first condition includes one or more of the following: a spatial location of the communication apparatus changes; a received signal-to-noise ratio of communication between the communication apparatus and the first device is less than a third threshold; or duration after the communication apparatus sends the first time reversal detection signal reaches one time reversal detection signal sending cycle.

In a possible design, the interface unit is further configured to send first indication information to the first device, where the first indication information indicates the first condition that is met when the communication apparatus sends the second time reversal detection signal.

In a possible design, the first device is a network device, and the communication apparatus is a terminal device; the first device is a terminal device, and the communication apparatus is a network device; or the first device is a first terminal device, and the communication apparatus is a second terminal device different from the first terminal device.

According to a fifth aspect, an embodiment of this application provides a communication apparatus. The communication apparatus includes an interface circuit and a processor, and the processor and the interface circuit are coupled to each other. The processor is configured to implement the method in the first aspect or any one of the possible designs of the first aspect by using a logic circuit or executing code instructions. The interface circuit is configured to: receive a signal from a communication apparatus other than the communication apparatus and send the signal to the processor, or send a signal from the processor to a communication apparatus other than the communication apparatus. It can be understood that the interface circuit may be a transceiver, a transceiver machine, a transceiver, or an input/output interface.

Optionally, the communication apparatus may further include a memory, configured to: store instructions executed by the processor, or store input data required for running instructions by the processor, or store data generated after the processor runs instructions. The memory may be a physically independent unit, or may be coupled to the processor, or the processor includes the memory.

According to a sixth aspect, an embodiment of this application provides a communication apparatus. The communication apparatus includes an interface circuit and a processor, and the processor and the interface circuit are coupled to each other. The processor is configured to implement the method in the second aspect or any one of the possible designs of the second aspect by using a logic circuit or executing code instructions. The interface circuit is configured to: receive a signal from a communication apparatus other than the communication apparatus and send the signal to the processor, or send a signal from the processor to a communication apparatus other than the communication apparatus. It can be understood that the interface circuit may be a transceiver, a transceiver machine, a transceiver, or an input/output interface.

Optionally, the communication apparatus may further include a memory, configured to: store instructions executed by the processor, or store input data required for running instructions by the processor, or store data generated after the processor runs instructions. The memory may be a physically independent unit, or may be coupled to the processor, or the processor includes the memory.

According to a seventh aspect, an embodiment of this application provides a time reversal-based communication system. The communication system includes a first device and a second device. The first device may implement the method in the first aspect or any one of the possible designs of the first aspect, and the second device may implement the method in the second aspect or any one of the possible designs of the second aspect.

According to an eighth aspect, an embodiment of this application provides a computer-readable storage medium. The storage medium stores a computer program or instructions. When the computer program or the instructions are executed, the method in the first aspect or any one of the possible designs of the first aspect or the method in the second aspect or any one of the possible designs of the second aspect may be implemented.

According to a ninth aspect, an embodiment of this application further provides a computer program product, including a computer program or instructions. When the computer program or the instructions are executed, the method in the first aspect or any one of the possible designs of the first aspect or the method in the second aspect or any one of the possible designs of the second aspect may be implemented.

According to a tenth aspect, an embodiment of this application further provides a chip. The chip is coupled to a memory, and is configured to read and execute a program or instructions stored in the memory, to implement the method in the first aspect or any one of the possible designs of the first aspect, or implement the method in the second aspect or any one of the possible designs of the second aspect.

For technical effects that can be achieved in the third aspect to the tenth aspect, refer to the technical effects that can be achieved in the first aspect or the second aspect. Details are not described herein again.

## BRIEF DESCRIPTION OF DRAWINGS

FIG. 1 is a schematic diagram 1 of an architecture of a communication system according to an embodiment of this application;

FIG. 2 is a schematic diagram 2 of an architecture of a communication system according to an embodiment of this application;

FIG. 3 is a schematic diagram of an Industry 4.0 scenario according to an embodiment of this application;

FIG. 4 is a schematic diagram of a transceiver according to an embodiment of this application;

FIG. 5 is a schematic diagram of a time reversal-based communication method according to an embodiment of this application;

FIG. 6 is a schematic diagram 1 of a communication scenario according to an embodiment of this application;

FIG. 7 is a schematic diagram of a Dirichlet unit pulse sequence signal according to an embodiment of this application;

FIG. 8 is a schematic diagram 2 of a communication scenario according to an embodiment of this application;

FIG. 9 is a schematic diagram 1 of a time reversal-based communication process according to an embodiment of this application;

FIG. 10 is a schematic diagram 2 of a time reversal-based communication process according to an embodiment of this application;

FIG. 11 is a schematic diagram 3 of a communication scenario according to an embodiment of this application;

FIG. 12 is a schematic diagram of a process in which a network device adjusts a control board according to an embodiment of this application;

FIG. 13 is a schematic diagram 4 of a communication scenario according to an embodiment of this application;

FIG. 14 is a schematic diagram 5 of a communication scenario according to an embodiment of this application;

FIG. 15 is a schematic diagram 3 of a time reversal-based communication process according to an embodiment of this application;

FIG. 16 is a schematic diagram 4 of a time reversal-based communication process according to an embodiment of this application;

FIG. 17 is a schematic diagram 1 of a communication apparatus according to an embodiment of this application; and

FIG. 18 is a schematic diagram 2 of a communication apparatus according to an embodiment of this application.

## DESCRIPTION OF EMBODIMENTS

The technical solutions of embodiments of this application may be applied to various communication systems, for example, a global system for mobile communications (global system for mobile communication, GSM), a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunication system (universal mobile telecommunication system, UMTS), a worldwide interoperability for microwave access (worldwide interoperability for microwave access, WiMAX) communication system, or a 5th generation (5th generation, 5G) mobile communication system. The technical solutions provided in this application may be further applied to a future communication system, for example, a sixth generation mobile communication system. The communication system may also be a device-to-device (device-to-device, D2D) network, a wireless local area network (wireless local area network, WLAN)/wireless communication technology (Wi-Fi) network, a Bluetooth (Bluetooth) network, a UWB network, a narrowband Internet of Things (narrowband Internet of Things, NB-IoT), a long range radio (long range radio, LoRa) network, or another network.

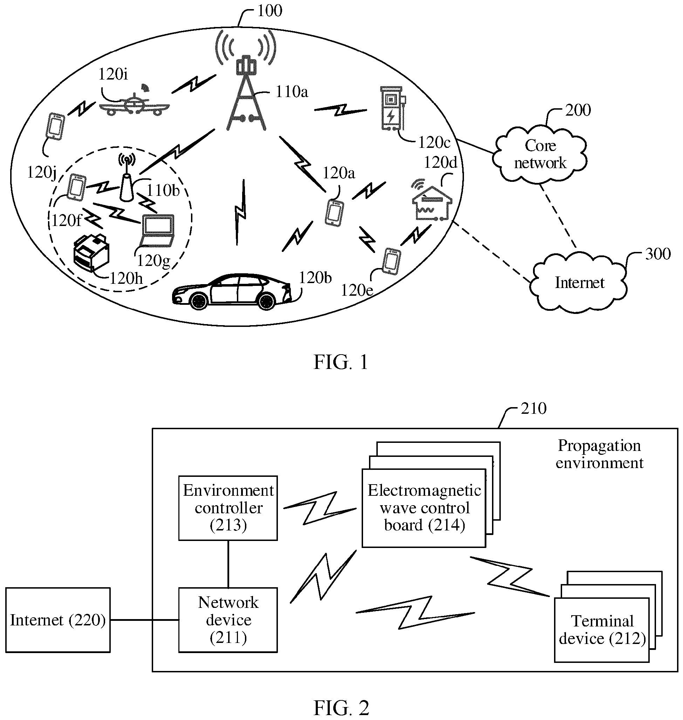

FIG. 1 is a schematic diagram of an architecture of a communication system to which an embodiment of this application is applied. As shown in FIG. 1, the communication system includes a radio access network 100 and a core network 200. Optionally, the communication system may further include an Internet 300. The radio access network 100 may include at least one network device, for example, 110a and 110b in FIG. 1, and may further include at least one terminal device, for example, 120a to 120j in FIG. 1. 110a is a base station, 110b is a micro base station, 120a, 120e, 120f, and 120j are mobile phones, 120b is a vehicle, 120c is a fuel dispenser, 120d is a home access node (home access point, HAP) deployed indoors or outdoors, 120g is a notebook computer, 120h is a printer, and 120i is an unmanned aerial vehicle. A same terminal device or network device may provide different functions in different application scenarios. For example, mobile phones in FIG. 1 include 120a, 120e, 120f, and 120j. The mobile phone 120a may access the base station 110a, connect to the vehicle 120b, directly communicate with the mobile phone 120e, and access the HAP. The mobile phone 120e may access the HAP and directly communicate with the mobile phone 120a. The mobile phone 120f may access the micro base station 110b, connect to the notebook computer 120g, and connect to the printer 120h. The mobile phone 120j may control the unmanned aerial vehicle 120i.

The terminal device is connected to the network device, and the network device is connected to the core network. A core network device and the network device may be different physical devices independent of each other; functions of the core network device and logical functions of the network device may be integrated into a same physical device; or some functions of the core network device and some functions of the network device may be integrated into one physical device. Connection between terminal devices and connection between network devices may be performed in a wired or wireless manner. FIG. 1 is merely a schematic diagram. The communication system may further include another device, for example, a wireless relay device and a wireless backhaul device, which are not drawn in FIG. 1.

The network device may also be referred to as a radio access network device, may be a base station (base station), an evolved NodeB (evolved NodeB, eNodeB), a transmission reception point (transmission reception point, TRP), a satellite, a next generation NodeB (next generation NodeB, gNB) in a 5th generation (5th generation, 5G) mobile communication system, a base station in a 6th generation (6th generation, 6G) mobile communication system, a base station in a future mobile communication system, an access node in a Wi-Fi system, or the like, and may also be a module or unit that completes some functions of the base station, for example, may be a central unit (central unit, CU), or may be a distributed unit (distributed unit, DU). The CU herein completes functions of a radio resource control protocol and a packet data convergence protocol (packet data convergence protocol, PDCP) of the base station, and may further implement functions of a service data adaptation protocol (service data adaptation protocol, SDAP). The DU completes functions of a radio link control layer and a medium access control (medium access control, MAC) layer of the base station, and may further complete functions of a part or all of a physical layer. For specific descriptions of the foregoing protocol layers, refer to technical specifications related to the 3rd generation partnership project (3rd generation partnership project, 3GPP). The network device may be a macro base station (for example, 110a in FIG. 1), may be a micro base station or an indoor base station (for example, 110b in FIG. 1), or may be a relay node or a donor node. A specific technology and a specific device form that are used by the network device are not limited in embodiments of this application. It may be understood that all or some functions of the network device in this application may alternatively be implemented by using a software function running on hardware, or may be implemented by using an instantiated virtualization function on a platform (for example, a cloud platform).

The terminal device may also be referred to as a terminal, user equipment (user equipment, UE), a mobile station, a mobile terminal, or the like. The terminal device may be widely used in various scenarios, for example, D2D, vehicle to everything (vehicle to everything, V2X) communication, machine-type communication (machine-type communication, MTC), Internet of Things (Internet of Things, IoT), virtual reality, augmented reality, industrial control, autonomous driving, telemedicine, a smart grid, smart furniture, a smart office, smart wearable, smart transportation, a smart city, and the like. The terminal device may be a mobile phone, a tablet computer, a computer with a wireless transceiver function, a wearable device, a vehicle, an unmanned aerial vehicle, a helicopter, an airplane, a ship, a robot, a robot arm, a smart home device, or the like. A specific technology and a specific device form that are used by the terminal device are not limited in embodiments of this application.

The network device and the terminal device may be at fixed locations, or may be movable. The network device and the terminal device may be deployed on a land, including an indoor device, an outdoor device, a handheld device, or a vehicle-mounted device; may be deployed on a water surface; or may be deployed on an airplane, a balloon, and a satellite in the air. An application scenario of the network device and the terminal device is not limited in embodiments of this application.

Roles of the network device and the terminal device may be relative. For example, the helicopter or the unmanned aerial vehicle 120i in FIG. 1 may be configured as a mobile network device. For the terminal device 120j that accesses the radio access network 100 by using 120i, the terminal device 120i is a network device. However, for the network device 110a, 120i is a terminal device, that is, 110a and 120i communicate with each other by using a radio air interface protocol. Certainly, 110a and 120i may also communicate with each other by using an interface protocol between network devices. In this case, compared with 110a, 120i is also a network device. Therefore, both the network device and the terminal device may be collectively referred to as communication apparatuses. 110a and 110b in FIG. 1 may be referred to as communication apparatuses having a function of a network device, and 120a to 120j in FIG. 1 may be referred to as communication apparatuses having a function of a terminal device.

Communication may be performed between a network device and a terminal device, between network devices, and between terminal devices by using a licensed spectrum, may be performed by using an unlicensed spectrum, or may be performed by using both the licensed spectrum and the unlicensed spectrum. Communication may be performed by using a spectrum below 6 gigahertz (gigahertz, GHz), may be performed by using a spectrum above 6 GHz, or may be performed by using a spectrum below 6 GHz and a spectrum above 6 GHz. A spectrum resource used for wireless communication is not limited in embodiments of this application.

In embodiments of this application, the function of the network device may alternatively be performed by a module (for example, a chip) in the network device, or may be performed by a control subsystem including the function of the network device. The control subsystem including the function of the network device may be a control center in the foregoing application scenarios such as a smart grid, industrial control, intelligent transportation, and a smart city. The function of the terminal device may alternatively be performed by a module (for example, a chip or a modem) in the terminal device, or may be performed by an apparatus including the function of the terminal device.

In this application, the network device sends a downlink signal or downlink information to the terminal device, where the downlink information is carried on a downlink channel. The terminal device sends an uplink signal or uplink information to the network device, where the uplink information is carried on an uplink channel. To communicate with the network device, the terminal device needs to establish a wireless connection to a cell controlled by the network device. The cell that establishes the wireless connection to the terminal device is referred to as a serving cell of the terminal device. When communicating with the serving cell, the terminal device is further interfered with by a signal from a neighboring cell.

In addition, an architecture of the communication system to which embodiments of this application are applied may further include an environment controller and an electromagnetic wave control board. Refer to an architecture of a communication system shown in FIG. 2, FIG. 2 may include a radio access network 210 and an Internet (Internet) 220. The radio access network 210 may include a network device 211, a terminal device 212, an environment controller 213, and an electromagnetic wave control board 214. The environment controller 213 is interconnected with the network device 211, the network device 211 is interconnected with the Internet 220, the environment controller 213 is interconnected with the electromagnetic wave control board 214, and the network device 211 is interconnected with the electromagnetic wave control board 214 and the terminal device 212. A specific interconnection manner may be wired communication or wireless communication.

In the embodiment of this application, a physical space environment in which network elements (or devices) such as the network device 211, the terminal device 212, the environment controller 213, and the electromagnetic wave control board 214 in the radio access network are deployed, for example, a factory workshop, an office, or a conference room, may be referred to as a propagation environment. The network device or the environment controller may adjust a quantity of multipath channels between the network device and the terminal device by adjusting a working state (for example, a location, actively reflecting a signal, or passively reflecting a signal) of the electromagnetic wave control board.

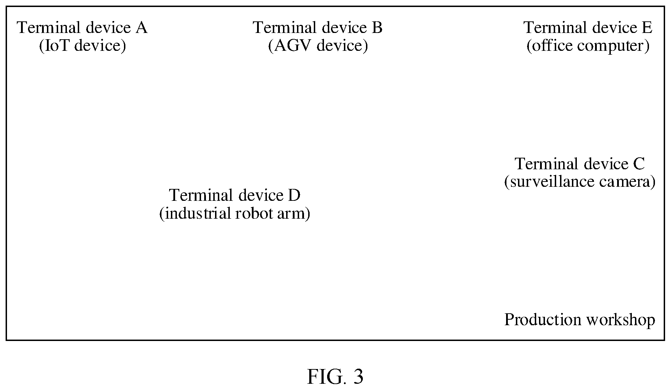

Embodiments provided in this application are applicable to a plurality of different scenarios. FIG. 3 is a schematic diagram of an Industry 4.0 scenario to which an embodiment of this application is applicable. The Industry 4.0 scenario is usually a hybrid service scenario in which a plurality of service requirements such as a high data rate, a low latency, high reliability, and a large quantity of connections coexist. In addition, both a hardware capability and a quality of service (quality of service, QoS) of the terminal device differ greatly. FIG. 3 may include one or more types of a first-type terminal device (a terminal device A) to a fifth-type terminal device (a terminal device E). The first-type terminal device (the terminal device A) may be an IoT device that stores goods, and is characterized by a large quantity of connections, a low transmission rate, sensitive to power consumption, and insensitive to latency. A second-type terminal device (a terminal device B) may be an automated guided vehicle (automated guided vehicle, AGV) device, and is characterized by a movable location, a continuous coverage requirement, a medium transmission rate, and sensitive to a delay. A third-type terminal device (a terminal device C) may be a surveillance camera, and is characterized by a fixed location, a high transmission rate, and a medium transmission reliability requirement. A fourth-type terminal device (a terminal device D) may be an industrial robot arm, and is characterized by a fixed location, a medium transmission rate, sensitive to a delay, and a high transmission reliability requirement. The fifth-type terminal device (the terminal device E) may be an office computer or a tablet, and is characterized by a slowly changing location, a medium rate, and a medium transmission reliability requirement.

At present, the application of the time reversal technology mainly depends on a UWB, and uses a short UWB slot to identify sufficient spatial multipath channels and support time reversal work. A communication environment to which the time reversal technology is applicable is limited, and a UWB slot is short. During communication, components such as an ADC and a DAC with a high sampling rate need to be used for signal processing. This is difficult to implement, and costs and power consumption are high. Therefore, how to improve an application scope of time reversal-based communication and reduce a performance requirement of time reversal-based communication on a signal processing component is a problem worth considering. Therefore, this application is intended to provide a time reversal-based communication solution, so as to improve a use range of time reversal-based communication and reduce a performance requirement of time reversal-based communication on a signal processing component.

The following describes in detail embodiments of this application with reference to accompanying drawings.

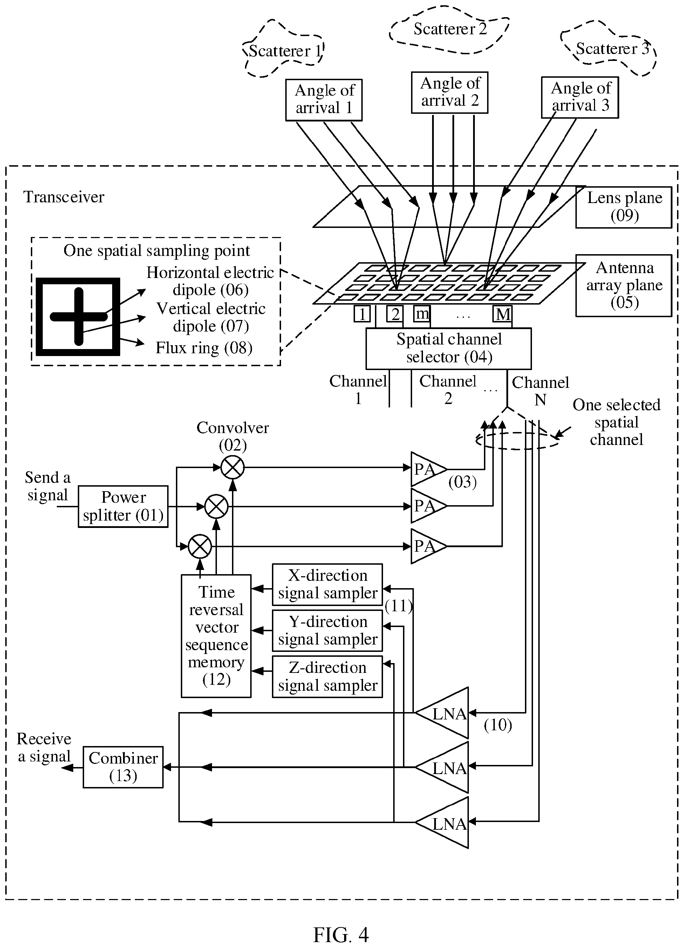

FIG. 4 is a schematic diagram of a transceiver according to an embodiment of this application. The transceiver may also be referred to as a transceiver, a transceiver, a wireless transceiver, or the like, and may be used in a device such as a network device or a terminal device. The transceiver may include a power splitter 01 (a power splitter for short, where a one-to-three power splitter is used as an example in FIG. 4), a plurality of signal convolvers 02 (convolvers for short, a two-to-one convolver is used as an example in FIG. 4), a plurality of power amplifiers (power amplifiers, PAs) 03, a spatial channel selector 04, an antenna array plane 05, a lens plane 09, a low noise amplifier (low noise amplifier, LNA) 10, a plurality of signal samplers 11 (including an X-direction signal sampler, a Y-direction signal sampler, and a Z-direction signal sampler), a time reversal vector sequence memory 12 and a power combiner (combiner for short) 13, where the antenna array plane 05 includes a plurality of spatial sampling points, and one spatial sampling point includes a horizontal electric dipole 06, a vertical electric dipole 07, and a flux ring 08.

Receiving link: A signal from an external propagation environment enters the lens plane 09; the signal output from the lens plane is mapped to a spatial sampling point of the antenna array plane 05, where a horizontal electric dipole 06 of the spatial sampling point may detect a signal in an X direction, a vertical electric dipole 07 may detect a signal in a Y direction, and a flux ring 08 may detect a signal in a Z direction; and signals output from the spatial sampling point are input to the spatial channel selector 04; the signals that are in three directions X, Y, and Z and that are output from the spatial channel selector 04 are respectively input into three LNAs 10; a signal output from each of the LNAs 10 is split into two signals, so that one signal enters the signal samplers 11 in the three directions X, Y, and Z, and the other signal enters the combiner 13; and a signal output from the combiner 13 is a received signal. Time reversal vector sequences output by the signal samplers 11 in the three directions X, Y, and Z enter the time reversal vector sequence memory 12. The time reversal vector sequence memory 12 may output stored time reversal vector sequences to three convolvers 02 of a transmission link, respectively. The X, Y, and Z directions are perpendicular to each other.

Transmitting link: A transmit signal is input into the one-to-three power splitter 01; three branch signals output from the power splitter pass through the two-to-one convolvers 02 respectively, where input signals of another channel of the convolvers 02 are time reversal vector sequences (or time reversal signals corresponding to the time reversal vector sequences) in the three directions X, Y, and Z; signals output from the convolvers 02 pass through the power amplifiers 03; signals output from the power amplifiers 03 pass through the spatial channel selector 04; signals output from the spatial channel selector 04 are input to the antenna array plane 05, where a signal obtained through convolution in the X direction may be input to the horizontal electric dipole 06, a signal obtained through convolution in the Y direction may be input to the vertical electric dipole 07, and a signal obtained through convolution in the Z direction may be input to the flux ring 08; signals obtained through combination at M spatial sampling points pass through the lens plane 09; and a signal (an electromagnetic wave signal) that is output from the lens plane 09 finally enters the external propagation environment of the transceiver.

It should be understood that the foregoing is described by using an example in which the horizontal electric dipole 06 processes (for example, detects) the signal in the X direction and the vertical electric dipole 07 processes (for example, detects) the signal in the Y direction at the spatial sampling point. In some embodiments, the horizontal electric dipole 06 may process (for example, detects) the signal in the Y direction, and the vertical electric dipole 07 processes (for example, detects) the signal in the Z direction. In addition, the transceiver may include one or more transmitting links and receiving links, and each transmitting link and each receiving link may be associated with one spatial sampling point to send or receive a signal.

In addition, it should be understood that ordinal numbers such as "first" and "second" mentioned in embodiments of this application are used to distinguish between a plurality of objects, and are not used to limit sizes, content, a sequence, a time sequence, priorities, importance degrees, or the like of the plurality of objects. For example, a first threshold and a second threshold may be a same threshold, or may be different thresholds. In addition, this type of name does not indicate that values, corresponding parameters, priorities, importance degrees, or the like of the two thresholds are different.

In embodiments of this application, unless otherwise specified, a quantity of nouns represents "a singular noun or a plural noun", namely, "one or more". "At least one" means one or more, and "a plurality of" means two or more. "And/or" describes an association relationship between associated objects, and represents that three relationships may exist. For example, A and/or B may represent the following cases: A exists alone, both A and B exist, and B exists alone, where A and B may be singular or plural. The character "/" generally indicates an "or" relationship between the associated objects. For example, A/B indicates A or B. "At least one of the following items (pieces)" or a similar expression thereof refers to any combination of these items, including any combination of singular items (pieces) or plural items (pieces). For example, at least one (piece) of a, b, or c may represent: a, b, c, a-b, a-c, b-c, or a-b-c, where a, b, and c may be singular or plural.

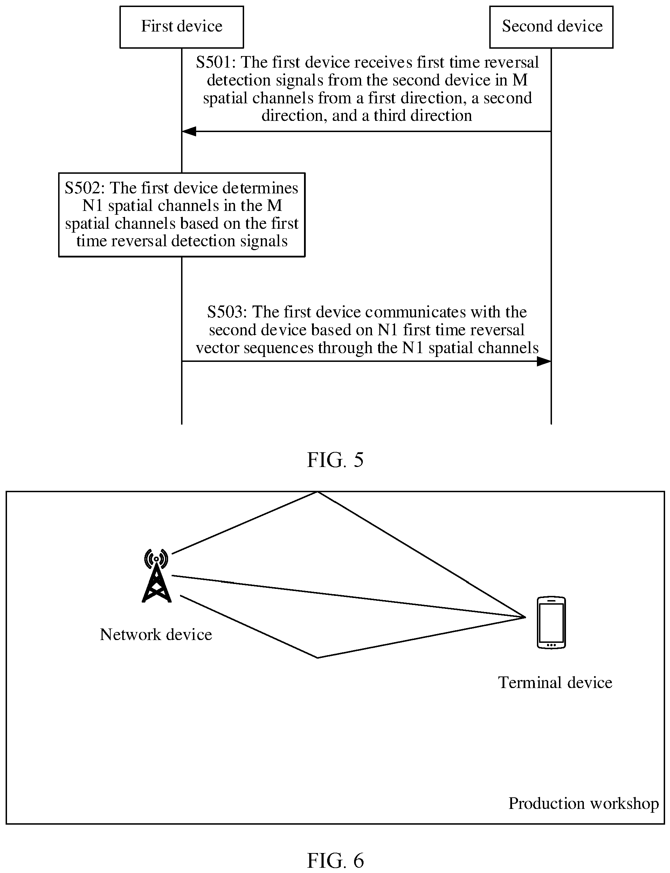

FIG. 5 is a schematic diagram of a time reversal-based communication method according to an embodiment of this application. The method includes the following steps.

S501: A first device receives first time reversal detection signals from a second device in M spatial channels from a first direction, a second direction, and a third direction.

M is a quantity of spatial channels on which the first device is capable of working, M is a positive integer, and the first direction, the second direction, and the third direction are perpendicular to each other. For example, in a spatial rectangular coordinate system, the first direction may be a horizontal axis (X) direction, the second direction is a longitudinal axis (Y) direction, and the third direction is a vertical axis (Z) direction. Certainly, in the spatial rectangular coordinate system, the first direction may alternatively be a Y direction, the second direction is an X direction, and the third direction is a Z direction. For ease of description, in embodiments of this application, an example in which in the spatial rectangular coordinate system, the first direction is the X direction, the second direction is the Y direction, and the third direction is the Z direction is used for description.

S502: The first device determines N1 spatial channels in the M spatial channels based on the first time reversal detection signals.

N1 is a positive integer less than or equal to M.

In an example, the first device may determine, randomly or based on a specific rule, the N1 spatial channels in the M space on which the first device is capable of working. In some implementations, to ensure a communication effect, energy of the first time reversal detection signals received by the first device through the N1 spatial channels may be greater than or equal to a first threshold.

S503: The first device communicates with the second device based on N1 first time reversal vector sequences through the N1 spatial channels.

The N1 first time reversal vector sequences are determined by the first device based on the first time reversal detection signals received through the N1 spatial channels from the first direction, the second direction, and the third direction.

The time reversal-based communication method provided in this embodiment of this application may be applied to downlink communication, may be applied to uplink communication, or may be applied to sidelink communication. When the time reversal-based communication method is applied to downlink communication, the first device may be a network device, and the second device may be a terminal device, that is, the network device is a transmit end of data (or a data signal), and the terminal device is a receive end of data. When the time reversal-based communication method is applied to uplink communication, the first device may be a terminal device, and the second device may be a network device, that is, the terminal device is a transmit end of data, and the network device is a receive end of data. When the time reversal-based communication method is applied to sidelink communication, the first device may be a terminal device, and the second device may also be a terminal device. In other words, one terminal device is a transmit end of data, and the other terminal device is a receive end of data. The following uses an example in which the first device is a network device and the second device is a terminal device for description.

As shown in FIG. 6, a production workshop includes at least one network device and at least one terminal device. When the network device needs to send data (or a data signal) to the terminal device, the network device may notify, by using a channel like a physical downlink control channel (physical downlink control channel, PDCCH), the terminal device that the network device has the data to be sent to the terminal device. When learning that the network device has the data to be sent to the terminal device, the terminal device may send a time reversal detection signal to the network device, for example, send the first time reversal detection signal to the network device.

A time reversal detection sequence carried (or carried) by the time reversal detection signal may be a ZC sequence. A specific ZC sequence ($x_u$) may be generated in the following manner:

$$x_u(n) = \exp\left[-j\pi u \frac{n(n+1)}{N_{ZC}}\right], \quad i = 0,1,\dots,N_{ZC} - 1$$

u may also be referred to as a root of the ZC sequence, a value of $u$ is a positive integer, for example, u = 25 or 29, and a value of $N_{ZC}$ is a prime number, for example, $N_{ZC}$ = 139 or 839.

An offset value $v$ may be used as an identifier (identifier, ID) of the terminal device, and an offset ZC sequence $x_{u,v}(n)$ may be obtained from the standard ZC sequence $x_u(n)$, and $x_{u,v}(n)$ may be obtained according to the following formula:

$$x_{u,v}(n) = x_u((n+v) \bmod N_{ZC})$$

In some implementations, when the network device communicates with a plurality of terminal devices, different terminal devices may use ZC sequences of different offset values as time reversal detection sequences. The network device may determine, based on an offset value corresponding to a ZC sequence carried in a received time reversal detection signal, a terminal device that sends the time reversal detection signal. In an example, the network device communicates with a terminal device A, a terminal device B, and a terminal device C. The network device may indicate, by using radio resource control (radio resource control, RRC) signaling, downlink control information (downlink control information, DCI), and the like, the terminal device A to use an offset value A, the terminal device B to use an offset value B, and the terminal device C to use an offset value C. If an offset value corresponding to a ZC sequence carried in a specific time reversal detection signal received by the network device is the offset value A, the network device may determine that the received time reversal detection signal comes from the terminal device A.

In some other implementations, when the network device communicates with a plurality of terminal devices, different terminal devices may alternatively use ZC sequences with a same offset value as time reversal detection sequences. The network device may distinguish between, based on one or more of time or frequencies or time-frequency blocks of received time reversal detection signals, the terminal devices that send the time reversal detection signals carrying the same ZC sequence. In an example, the network device communicates with a terminal device A and a terminal device B. The network device may indicate, by using RRC signaling, DCI, and the like, the terminal device A to use an offset value A and an application frequency A, and the terminal device B to use an offset value A and an application frequency B. Although offset values corresponding to time reversal detection sequences carried in time reversal detection signals received by the terminal device from the terminal device A and the terminal device B are the same, the network device may determine, based on a frequency at which a time reversal detection signal is received, that the time reversal detection signal comes from the terminal device A or the terminal device B.

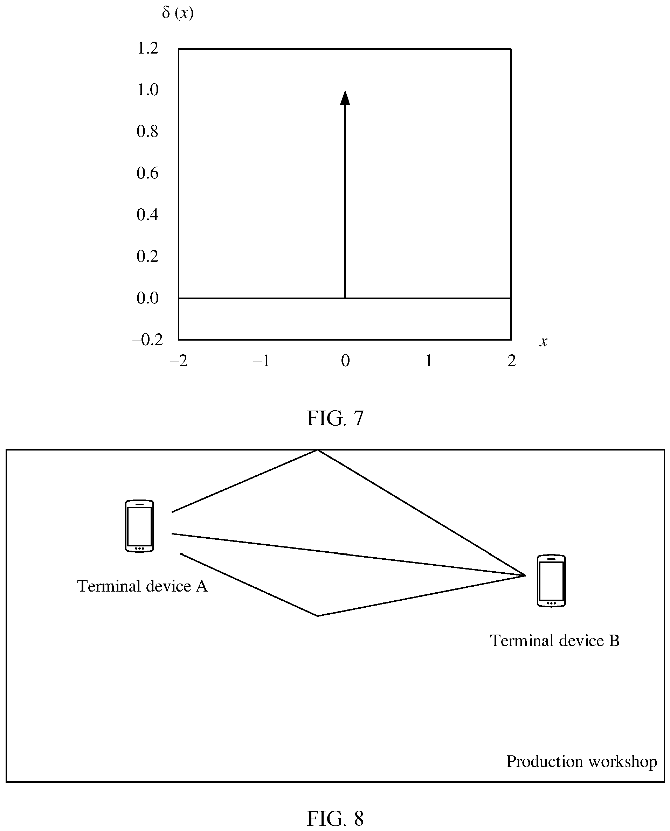

In addition, a time reversal detection sequence carried by the time reversal detection signal may also use a Dirichlet (Dirichlet) unit pulse sequence $\delta(x)$. The Dirichlet unit pulse sequence $\delta(x)$ may be represented as $\delta(x) = \begin{cases} 1, & x = 0 \\ 0, & x \neq 0 \end{cases}$. As shown in FIG. 7, a time reversal detection signal carrying the Dirichlet unit pulse sequence has only one unit pulse, and does not involve information such as an offset. Time reversal detection signals that are sent by different terminal devices and that carry Dirichlet unit pulse sequences are the same or similar, and the network device cannot distinguish between the terminal devices based on different features of the Dirichlet unit pulse sequences. Therefore, the network device needs to indicate, to a terminal device, one or more pieces of information such as time, a frequency, or a time-frequency block for sending a time reversal detection signal carrying a Dirichlet unit pulse sequence, and at least one piece of information such as time, frequencies, or time-frequency blocks indicated to the different terminal devices is different, so that the network device distinguishes between the time reversal detection signals from the different terminal devices.

For example, the first time reversal detection sequence carried in the first time reversal detection signal is a ZC sequence, and the terminal device sends the first time reversal detection signal to the network device by using an omnidirectional antenna. A time domain symbol of the first time reversal detection signal may be denoted as $x[n]$, $n = 0,1,2 \ldots, N$, and a frequency domain symbol may be denoted as $X[n] = FFT(x[n])$. A center frequency of an electromagnetic wave carrier used by the terminal device to send the first time reversal detection signal may be denoted as $f_c$, and a carrier bandwidth may be denoted as B. A wavelength of an electromagnetic wave is defined as $\lambda = c/f_c$, and a wavenumber of the electromagnetic wave is defined as a quantity of wavelengths per $2\pi$ lengths, and is denoted as $k_0 = 2\pi/\lambda$, where $c$ represents a speed of light.

The first time reversal detection signal sent by the terminal device finally arrives at a spatial location of a transceiver of the network device after being reflected, refracted, diffracted, and the like by a scatterer in a propagation environment. The network device receives the first time reversal detection signals in the M spatial channels in the X direction, the Y direction, and the Z direction.

For example, the network device has the transceiver shown in FIG. 4. For ease of description, an angle of arrival (angle of arrival, AoA) of a first time reversal detection signal from a scatterer 1 is denoted as an angle of arrival 1, an AoA of the first time reversal detection signal from a scatterer 2 is denoted as an angle of arrival 2, and an angle of arrival of the first time reversal detection signal from a scatterer 3 is denoted as an angle of arrival 3. After the first time reversal detection signals sent by the terminal device pass through one or more of reflection, refraction, diffraction, and the like of scatterers in the propagation environment, first time reversal detection signals from the angle of arrival 1, the angle of arrival 2, and the angle of arrival 3 are superimposed and are incident to the lens plane of the transceiver of the network device . For ease of description, in embodiments of this application, the first time reversal detection signals from different angles of arrival that are superimposed and incident to the lens plane may be denoted as y(t). In this case, the first time reversal detection signal is not sampled (for example, sequentially sampled), and is still continuous in time domain. $t$ may be a time variable, and represents a moment at which the first time reversal detection signal is incident to the lens plane (or a moment at which the network device receives the first time reversal detection signal).

Locations of different spatial pixels of the lens plane are separately marked as $\vec{r} = (x_m, y_n, z_l)$, where $0 \leq x_m \leq L_x$, $0 \leq y_n \leq L_y$, and $0 \leq z_l \leq L_z$. Herein, $L_x$ may represent a geometric length of the lens plane, $L_y$ may represent a geometric width of the lens plane, and $L_z$ may represent a geometric thickness of the lens plane. Certainly, if the lens plane is not a rectangle, but a circle (or a sphere) whose radius is $R$, $-R \leq x_m \leq R$, $-R \leq y_n \leq R$, and $x_m^2 + y_n^2 \leq R^2$; or $-R \leq x_m \leq R$, $-R \leq y_n \leq R$, $-R \leq z_l \leq R$, and $x_m^2 + y_n^2 + z_l^2 \leq R^2$. At any instant moment $t$, signals on different spatial pixels of the lens plane are different to some extent, and first time reversal detection signals that are incident to the different spatial pixels $\vec{r}$ may be separately denoted as $y(\vec{r},t)$.

In an example, a rectangular transmissive supersurface is used as the lens plane. When an incident first time reversal detection signal passes through the lens plane, the following signal transformation process from a spatial domain

$y(\vec{r},t)$ to a wavenumber domain $Y(\vec{k},t)$ is performed:

$$Y(\vec{k},t) = \int_{\mathbb{R}^3} y(\vec{r},t)\exp\left(-j\omega\vec{k}\cdot\vec{r}\right)d\vec{r}$$

$$= \int_0^{L_z}\int_0^{L_y}\int_0^{L_x} y(x_m,y_n,z_l,t)\exp\left(-j\omega\vec{k}\cdot(x_m\cdot\hat{k}_x + y_n\cdot\hat{k}_y + z_l\cdot\hat{k}_z)\right)dx_m\,dy_n\,dz_l$$

$\vec{k}$ represents a wavenumber domain vector, $\hat{k}_x$, $\hat{k}_y$, and $\hat{k}_z$ represent unit vectors in X, Y, and Z directions in the wavenumber domain respectively, $j$ represents an imaginary number, and $\omega$ represents an angular frequency.

The so-called spatial domain refers to space formed by spatial pixels. In the spatial domain, processing of pixel values by using geometric coordinates (X, Y, Z) as independent variables is referred to as spatial domain processing. The so-called wavenumber domain is transformed from the spatial domain, and indicates a change of a phase with a spatial location. A formula for transforming from the spatial domain to the wavenumber domain is shown in the foregoing formula. In the wavenumber domain, processing of a signal by using ($k_x$,$k_y$,$k_z$) wavenumber coordinates as independent variables is referred to as wavenumber domain processing. In an implementation, the wavenumber domain is also referred to as K-space.

After an incident first time reversal detection signal $y(\vec{r},t)$ passes through the lens plane, the signal is decomposed into a series of plane waves with different directions and amplitudes. Each plane wave in a specific direction is used as a carrier and carries signal information at a specific spatial frequency. Three incident waves from three different scatterers in different angle of arrival directions shown in FIG. 4 are used as an example. After passing through the lens plane, the three incident waves are emitted to obtain three plane waves in three different directions, to be irradiated on the antenna array plane behind the lens plane.

It is assumed that the antenna array plane includes M spatial sampling points. When $L_x$, $L_y$, $\Delta$x , and $\Delta$y are given, $M = \left(\frac{L_x}{\Delta x}+1\right)\left(\frac{L_y}{\Delta y}+1\right)$ may be obtained through calculation, where $L_x$ is a length of the antenna array plane, $L_y$ is a width of the antenna array plane, $\Delta$x is a spacing between the spatial sampling points in a length direction of the antenna array plane, and $\Delta$y is a spacing between the spatial sampling points in a length direction of the antenna array plane.

In some embodiments, a value of an interval distance between the spatial sampling points on the antenna array plane may be less than or equal to a half wavelength of an electromagnetic wave (namely, an electromagnetic wave carrier of a signal). For example, these spatial sampling points may be evenly distributed on the antenna array plane with $\Delta$x=$\lambda$/2 and $\Delta$y=$\lambda$/2, where $\lambda$ represents a wavelength of an electromagnetic wave carrier used by the terminal device. Each spatial sampling point may be formed by a horizontal electric dipole, a vertical electric dipole, a flux ring, and energy detection circuits attached thereto. The horizontal electric dipole and the vertical electric dipole can be vertically crossed in a "cross" or "X" shape, with the flux ring surrounding their periphery. For a spatial sampling point, an energy level obtained through detection when a horizontal electric dipole receives a first time reversal detection signal from an X direction is denoted as $p_x(m)$, an energy level obtained through detection when a vertical electric dipole receives a first time reversal detection signal from a Y direction is denoted as $p_y(m)$, and an energy level obtained through detection when a flux ring receives a first time reversal detection signal from a Z direction is denoted as is denoted as $p_z(m)$.

In embodiments of this application, each spatial sampling point and a subsequent receiving link or transmitting link may be referred to as a spatial channel. In some implementations, to effectively reduce power consumption of the transceiver without significantly affecting transmission/receiving performance, the network device may select only a part of the M spatial channels for communication with the terminal device. For example, the network device selects a spatial channel on which energy of a received first time reversal detection signal is greater than or equal to a first threshold, to communicate with the terminal device.

In an example, the network device (for example, the spatial channel selector in the network device) may put a spatial channel that satisfies $p_x(m) + p_y(m) + p_z(m) \geq \eta$ into a spatial channel subset $\{m \mid p(m) \geq \eta\}$ available for communication with the terminal device, and may select N1 spatial channels from the spatial channel subset for communication with the terminal device.

In addition, according to an electromagnetic field theory, a value of a degree of freedom (degrees of freedom, DoF) of the lens plane satisfies $DoF \leq \left\lceil\frac{\pi A}{\lambda^2}\right\rceil$ , where $A = L_x L_y$ represents an area of the lens plane, and $\lambda$ represents a wavelength of an electromagnetic wave. For example, when $L_x = L_y = 0.9$ $m$, $A = 0.81 m^2$, $\lambda = 0.1$ m (corresponding to an electromagnetic wave frequency $f_c$ = 3 GHz), $DoF \leq \lceil 254.5 \rceil = 255$ may be obtained through calculation.

In some implementations, the network device may further limit, based on *DoF* of the lens plane, a quantity N1 of spatial channels that are selected from the spatial channel subset and that used for communication with the terminal device, that is, N1 needs to be less than or equal to *DoF.*

For example, the network device finally determines the N1 spatial channels for communication with the terminal device. For the M spatial channels available for the network device, a value of M may be greater than or equal to *DoF,* and for the N1 spatial channels finally determined by the network device, a value of N1 may be less than or equal to *DoF.* For example, when *DoF* is 255, M may be 255, 512, 1024, 2028, or the like, and N1 may be 255, 128, 64, 32, or the like.

Each of the selected N1 spatial channels includes a first time reversal detection signal received in the X direction, a first time reversal detection signal received in the Y direction, and a first time reversal detection signal received in the Z direction. After first time reversal detection signals in the three directions corresponding to each spatial channel pass through the LNAs respectively, the first time reversal detection signals enter the X-direction signal sampler (for example, a time sequence signal sampler), the Y-direction signal sampler, and the Z-direction signal sampler respectively, and three scalar sequences (discrete signals) obtained through sampling are respectively denoted as $Y_{kx}[n]$, $Y_{ky}[n]$, and $Y_{kz}[n]$. A vector sequence $\vec{Y}[n]$ of the scalar sequences may be represented as $\vec{Y}[n] = Y_{kx}[n]\cdot\hat{k}_x + Y_{ky}[n]\cdot\hat{k}_y + Y_{kz}[n]\cdot\hat{k}_z$. Elements (namely, sampling values) in each scalar sequence in the vector sequence $\vec{Y}[n]$ are reversed based on a sampling sequence. For example, a sequence of 0, 1, and 1 is reversed into a sequence of 1, 1, and 0, to obtain a time reversal vector sequence denoted as $\vec{Y}[-n]$. The time reversal vector sequence memory stores the vector $\vec{Y}[-n]$, or stores $Y_{kx}[-n]$, $Y_{ky}[-n]$, and $Y_{kz}[-n]$,

For the N1 spatial channels, the network device may determine N1 time reversal vector sequences that are in one-to-one correspondence with the N1 spatial channels. In some implementations, for one spatial channel, discrete time sampling rates of an X-direction signal sampler, a Y-direction signal sampler, and a Z-direction signal sampler may be the same or may be different. The discrete time sampling rates of the X-direction signal sampler, the Y-direction signal sampler, and the Z-direction signal sampler may be set to be the same by default. In an actual system running process, in consideration of factors such as power consumption reduction and costs reduction, a high discrete time sampling rate may be set in a direction with a high energy level, and a low discrete time sampling rate may be set in a direction with a low energy level. When discrete time sampling rates in different directions are different, and scalar sequences in a plurality of directions are combined to obtain a vector sequence $\vec{Y}[n]$, a discrete time sampling rate in a direction with a highest discrete time sampling rate may be used as a reference, and interpolation processing may be performed on a scalar sequence in another direction, so that a discrete time sampling rate of the obtained vector sequence is equal to the discrete time sampling rate in the direction with the highest discrete time sampling rate.

When the network device sends a data signal, for example, a first data signal, to the terminal device, the network device may input the first data signal into a power splitter of the N1 spatial channels corresponding to the terminal device. For each spatial channel, three branches of first data signals output from the power splitter pass through convolvers respectively, and perform a convolution operation with time reversal sequences (or signals) in three directions X, Y, and Z of the spatial channel respectively. Signals output from the convolvers pass through the power amplifiers (PA). The signals output from the power amplifiers pass through the spatial channel selector, and are input to spatial a sampling point corresponding to the spatial channel, where a signal obtained through convolution in an X direction is input to a horizontal electric dipole of the spatial sampling point, a signal obtained through convolution in a Y direction is input to a vertical electric dipole, and a signal obtained through convolution in a Z direction is input to a flux ring. A radiated electromagnetic wave signal (namely, the first data signal) that is obtained by combination at the selected spatial sampling point passes through the lens plane. The electromagnetic wave signal coming out of the lens plane finally enters the propagation environment outside the transceiver.

In some implementations, the terminal device may further record an antenna configuration status obtained when the terminal device sends the first time reversal detection signal. For example, the antenna configuration status may be sent to the network device through a channel like a PDCCH. The antenna configuration state may be an antenna radiation directivity pattern obtained by considering beamforming. Specifically, if the antenna of the terminal device is an omnidirectional antenna, the antenna configuration status is a 360° omnidirectional radiation directivity pattern; or if the antenna of the terminal device is a directional antenna, the antenna configuration status is a steering vector (steering vector) obtained when the first time reversal detection signal is sent. The network device may store the antenna configuration status obtained when the terminal device sends the first time reversal detection signal. When the antenna configuration status of the terminal device changes, the terminal device may further send a new antenna configuration status to the network device, and the network device may further adjust the applied N1 time reversal vector sequences based on the change of the antenna configuration status of the terminal device and information about impact of a prior antenna configuration status change on a time reversal detection vector sequence.

In the time reversal-based communication method shown in FIG. 5, for one spatial channel, the network device may receive time reversal detection signals from different spatial dimensions (for example, three directions), and reverse a sampling result of the time reversal detection signals based on a sequence in which the time reversal detection signals arrive at the network device, to determine a time reversal vector sequence. A capability of the network device to distinguish between radio channels in the propagation environment is increased, so that an effect of identifying more abundant spatial multipath channels can be achieved, and a time reversal operation can be performed more precisely, so that time reversal-based communication does not need to be strongly coupled with a UWB. This can improve an application scope of time reversal-based communication and reduce a performance requirement of time reversal-based communication on a signal processing component. In addition, the time reversal vector sequence has both amplitude information and direction information. As a channel fingerprint, the time reversal vector sequence may become a reference sequence of a new multiple access mode, and may further increase a quantity of terminal devices simultaneously supported by the communication system.

In addition, it should be understood that, the foregoing time reversal-based communication method is described by using an example in which the communication method is applied to downlink communication, the first device is a network device, and the second device is a terminal device. For uplink communication, the first device is a terminal device, and the second device is a network device. When the terminal device needs to send data (or a data signal) to the network device, the terminal device may first notify, the network device through a channel like a PDCCH, that "there is data to be sent". Then, the network device sends a first time reversal detection signal to the terminal device. Next, the terminal device samples and stores a first time reversal vector sequence. Finally, the terminal device modulates the to-be-sent data signal by using the stored first time reversal vector sequence, and sends a modulated signal to the network device. A specific communication process is similar to the communication process in which the time reversal-based communication method is applied to downlink communication. Details are not described herein again.

The time reversal-based communication method may be further applied to sidelink communication. As shown in FIG. 8, a production workshop includes at least a terminal device A and a terminal device B. When the terminal device A has data (or a data signal) to be sent to the terminal device B, the terminal device A may notify, the terminal device B through a channel like a physical sidelink control channel (physical sidelink control channel, PSCCH), that "there is data to be sent". The terminal device B sends a first time reversal detection signal to the terminal device A. Next, the terminal device A samples and stores a first time reversal vector sequence. Finally, the terminal device A modulates the to-be-sent data signal by using the stored first time reversal vector sequence, and sends a modulated signal to the terminal device B. A specific communication process is similar to the communication process of downlink communication. Details are not described herein again.

An example in which the first device is a network device and the second device is a terminal device is still used for description. In some embodiments, to improve an adaptability of time reversal-based communication to a change of a propagation environment, the terminal device may further send a time reversal detection signal to the network device again based on a time reversal detection signal sending cycle, or when a spatial location changes, or the like. The network device may further perform weighting and combination on time reversal vector sequences determined at different time for iteration. For example, the network device may perform combination on a current time reversal vector sequence and a prior time reversal vector sequence based on a weighting factor $\rho$ for iteration, so as to improve an adaptability of time reversal-based communication to a change of a propagation environment.

Specifically, after sending a first time reversal detection signal to the network device, the terminal device may send a second time reversal detection signal to the network device when the first condition is met. The first condition may include one or more of the following: a spatial location of the terminal device changes; a received signal-to-noise ratio of communication between the terminal device and the network device is less than a third threshold; or duration after the terminal device sends the first time reversal detection signal reaches one time reversal detection signal sending cycle.

After receiving the first time reversal detection signal from the terminal device, if the network device receives second time reversal detection signals from the terminal device in N1 spatial channels from an X direction, a Y direction, and a Z direction, the network device may further determine, based on the second time reversal detection signals, N1 second time reversal vector sequences corresponding to the N1 spatial channels, and may update N1 first time reversal vector sequences based on the N1 second time reversal vector sequences and a weighting factor. The N1 second time reversal vector sequences are determined by the network device based on the second time reversal detection signals received in the N1 spatial channels from the X direction, the Y direction, and the Z direction.

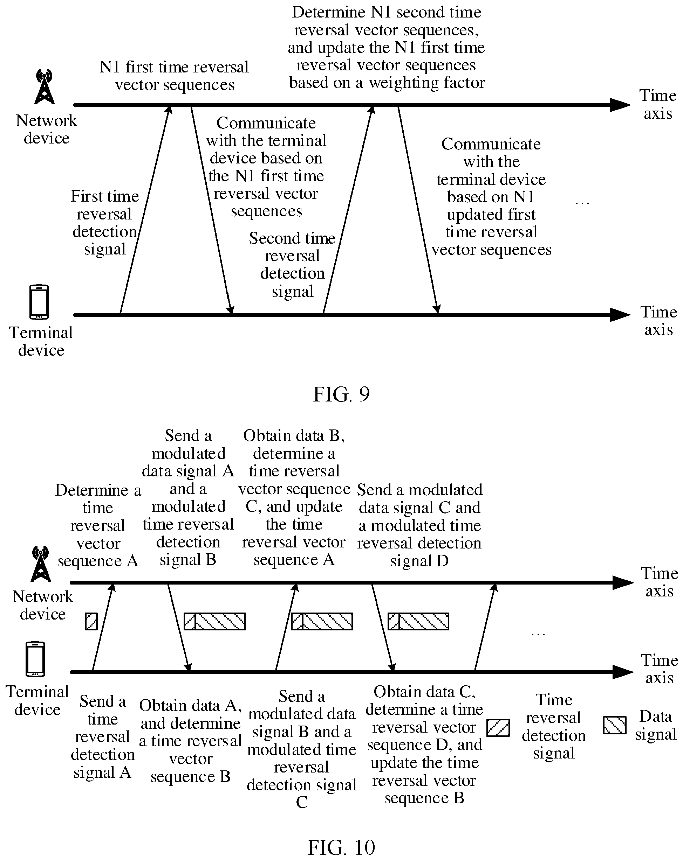

As shown in FIG. 9, after the network device determines, based on the first time reversal detection signal from the terminal device, the N1 spatial channels in M spatial channels on which the network device can work, determines N1 first time reversal vector sequences, and communicates with the terminal device through the N1 spatial channels based on the N1 first time reversal vector sequences, if the network device receives the second time reversal detection signals from the terminal device in the N1 spatial channels from the X direction, the Y direction, and the Z direction, the network device determines, based on the second time reversal detection signals, the N1 second time reversal vector sequences that are in one-to-one correspondence with the N1 spatial channels, and may update the N1 first time reversal vector sequences based on the N1 second time reversal vector sequences and a weighting factor $\rho$, and communicate with the terminal device through the N1 spatial channels based on an updated N1 first time reversal vector sequences. As an example, the second device may update the first time reversal detection sequence by using a formula $\vec{Z}[-n] = \rho\vec{Y}[-n] + (1 - \rho)\vec{Z}[-n]$, where $\vec{Z}[-n]$ on the left of the equal sign represents the updated first time reversal vector sequence, $\vec{Z}[-n]$ on the right of the equal sign represents the first time reversal vector sequence before the update, $\vec{Y}[-n]$ represents the second time reversal vector sequence, $\rho$ represents the weighting factor, $\rho \in [0,1]$.

For a case in which the spatial location of the terminal device changes, the received signal-to-noise ratio of communication between the terminal device and the network device is lower than a third threshold, or the like, the network device may further improve communication quality from aspects such as re-determining a spatial channel used for communication with the terminal device, or adding a spatial channel used for communication with the terminal device. Therefore, the terminal device may further send first indication information to the network device, where the first indication information indicates the first condition that is met when the terminal device sends the second time reversal detection signal.

In a possible implementation, if the first indication information received by the network device indicates that the spatial location of the terminal device changes, and/or the received signal-to-noise ratio of communication between the terminal device and the network device is less than the third threshold, the network device may re-enable the M spatial channels, receive second time reversal detection signals from the terminal device in the M spatial channels from the X direction, the Y direction, and the Z direction, determine N2 spatial channels in the M spatial channels based on the second time reversal detection signals, and communicate with the terminal device through the N2 spatial channels based on N2 second time reversal vector sequences. The N2 second time reversal vector sequences are determined by the network device based on the second time reversal detection signals received in the N2 spatial channels from the X direction, the Y direction, and the Z direction, where N2 is a positive integer less than or equal to M. Specifically, for implementation of determining, by the network device, the N2 spatial channels and the N2 second time reversal vector sequences, refer to the foregoing implementation of determining the N1 spatial channels and the N1 second time reversal vector sequences. Details are not described again.

In addition, to further improve robustness of time reversal-based communication, the network device may further determine N3 spatial channels that are an intersection between the N2 spatial channels and the N1 spatial channels; and update, based on N3 first time reversal vector sequences corresponding to the N3 spatial channels and a weighting factor, N3 second time reversal vector sequences corresponding to the N3 spatial channels.

In another possible implementation, if the first indication information received by the network device indicates that the received signal-to-noise ratio of communication between the terminal device and the network device is less than the third threshold, the network device may further improve communication quality by increasing a quantity of spatial channels used for communication. For example, based on the used N1 spatial channels, N2-N1 spatial channels are selected from remaining M-N1 spatial channels, and N2 spatial channels are used in total for communication with the terminal device, where N2 is a positive integer that is greater than N1 and less than or equal to M. The specifically selected N2-N1 spatial channels may be N2-N1 spatial channels, in the remaining M-N1 spatial channels, that receive first time reversal detection signals with highest energy. The network device may receive second time reversal detection signals from the terminal device in the N2 spatial channels from the X direction, the Y direction, and the Z direction, and communicate with the network device through the N2 spatial channels based on N2 second time reversal vector sequences. The N2 second time reversal vector sequences are determined by the network device based on the second time reversal detection signals received in the N2 spatial channels from the X direction, the Y direction, and the Z direction.

In addition, to further improve robustness of time reversal-based communication, the network device may further update, based on the N1 first time reversal vector sequences corresponding to the N1 spatial channels and the weighting factor, the N1 second time reversal vector sequences corresponding to the N1 spatial channels.

To further shorten a delay of time reversal-based communication, in some implementations, a detection phase and a communication phase of time reversal may be combined into one phase, and a data signal and a time reversal detection signal are sent in a same radio frame. For example, the time reversal detection signal is sent in a frame header of the radio frame, and the data signal is sent in a payload (payload) part of the radio frame. In other words, a same radio frame may include data carried by a data signal, and may further include a time reversal detection sequence carried by a time reversal detection signal. In an example, when the network device communicates with the terminal device through the N1 spatial channels based on the N1 first time reversal vector sequences, the network device may send a data signal (for example, a first data signal) and a time reversal detection signal (for example, a third time reversal detection signal) to the terminal device through the N1 spatial channels based on the N1 first time reversal vector sequences, so that the terminal device can implement time reversal detection when receiving the data signal from the network device, so as to determine, based on the time reversal detection signal from the network device, a time reversal vector sequence used by the network device.

FIG. 10 is a schematic diagram of a process in which a network device and a terminal device perform time reversal-based communication according to an embodiment of this application.

S1001: The terminal device sends a time reversal detection signal A to the network device.

The terminal device may send the time reversal detection signal A to the network device when the network device indicates that a data signal A needs to be sent to the terminal device.

S1002: The network device determines a time reversal vector sequence A based on the time reversal detection signal A.

It should be understood that, the network device may further determine, based on the received time reversal detection signal A, A1 spatial channels that are used for communication with the terminal device from spatial channels on which the network device can work. A quantity of time reversal vector sequences A determined by the network device may be A1, and the time reversal vector sequences A are in one-to-one correspondence with the A1 spatial channels.

S1003: The network device generates a radio frame including the data signal A and a second time reversal detection signal B, modulates the radio frame based on the time reversal vector sequence A, and sends an obtained radio frame to the terminal device.

S1004: The terminal device obtains, based on the data signal A, data A carried in the data signal A, and determines a time reversal vector sequence B based on the time reversal detection signal B.

It should be understood that, the terminal device may further determine, based on the received time reversal detection signal B, B1 spatial channels that are used for communication with the terminal device from spatial channels on which the terminal device can work. A quantity of time reversal vector sequences B determined by the network device may be B1, and the time reversal vector sequences B are in one-to-one correspondence with the B1 spatial channels.

S1005: The terminal device generates a radio frame including a data signal B and a time reversal detection signal C, modulates the radio frame based on the time reversal vector sequence B, and sends an obtained radio frame to the network device.

S1006: The network device obtains, based on the data signal B, data B carried in the data signal B, and determines a time reversal vector sequence C based on the time reversal detection signal C. In addition, the network device may further update the previously stored time reversal vector sequence A based on a weighting factor $\rho$ and the time reversal vector sequence C, to obtain an updated time reversal vector sequence A.

A quantity of time reversal vector sequences C determined by the network device may be A1, and the time reversal vector sequences C are in one-to-one correspondence with the A1 spatial channels. The network device may update the A1 time reversal vector sequences A based on the A1 time reversal vector sequences C and the weighting factor $\rho$.

S1007: The network device generates a radio frame including a data signal C and a time reversal detection signal D, modulates the radio frame based on the updated time reversal vector sequence A, and sends an obtained radio frame to the network device.

S1008: The terminal device obtains, based on the data signal C, data C carried in the data signal C, and determines a time reversal vector sequence D based on the time reversal detection signal D. In addition, the network device may further update the previously stored time reversal vector sequence B based on a weighting factor $\rho$ and the time reversal vector sequence D, to obtain an updated time reversal vector sequence B.

A quantity of time reversal vector sequences D determined by the terminal device may be B 1, and the time reversal vector sequences D are in one-to-one correspondence with the B 1 spatial channels. The terminal device may update the B 1 time reversal vector sequences B based on the B 1 time reversal vector sequences D and the weighting factor $\rho$.

It should be understood that weighting factors $\rho$ used by the network device and the terminal device may be the same or different, and weighting factors $\rho$ used by different terminal devices may be the same or different. The weighting factor $\rho$ may be a value greater than or equal to 0 and less than or equal to 1.

In a possible implementation, the weighting factor $\rho$ used by the terminal device may be configured by the network device. For example, the network device configures, through a downlink control channel, that a weighting factor $\rho$ used by a terminal device A is 0.4, and a weighting factor $\rho$ used by a terminal device B is 0.5. In addition, the network device may further configure weighting factors $\rho$ used by the terminal device at different moments, and the weighting factors $\rho$ configured by the network device for the terminal device at the different moments may be the same or may be different.

In addition, for simultaneous transmission of a data signal and a time reversal detection signal, that is, a case in which a radio frame (frame structure) undergoing transmission between the network device and the terminal device includes both the data signal and the time reversal detection signal, lengths of the time reversal signal and the data signal may be adjusted. In a possible implementation, if a change of a propagation environment in which the network device and the terminal device are located is smaller, for example, mobility of the terminal device is less, and location movement of an object around the terminal device is less, a proportion of a data signal in a radio frame is larger, and a proportion of a time reversal detection signal in the radio frame is smaller; otherwise, a proportion of a data signal in a radio frame is smaller, and a proportion of a time reversal detection signal in the radio frame is larger. In another possible implementation, a larger quantity of times of uplink and downlink communication between the network device and the terminal device indicates a larger proportion of a data signal in a radio frame, and a smaller proportion of a time reversal detection signal in the radio frame.

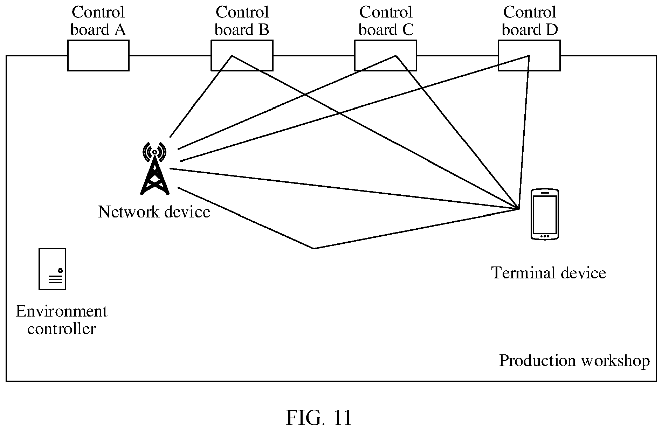

As shown in FIG. 11, a propagation environment in which a network device and a terminal device are located may further include an environment controller and one or more control boards (for example, a control board A to a control board D). The control board may be an electromagnetic wave control board or the like. A quantity of multipath channels and an angle of arrival between the network device and the terminal device may be adjusted by adjusting a working state of one or more control boards, for example, by adjusting one or more of a location of the one or more control boards, a quantity of array elements, a pattern of an array element, an antenna directivity pattern, actively reflecting a signal, or passively reflecting a signal (namely, an electromagnetic wave). In this way, a robust working condition that satisfies a time reversal technology is constructed in a case of a low frequency band and a small bandwidth, and various complex wireless transmission environments are automatically adapted.

Specifically, in an enabling phase of time reversal, the network device or the environment controller may adjust an angle of arrival from one or more controllable scatterers (control boards) to the network device and the terminal device. In a detection phase of time reversal, the terminal device sends a time reversal detection signal to the network device, and the network device selects N1 spatial channels, and samples and processes a time reversal detection signal in each spatial channel, to obtain a time reversal vector sequence. In a communication phase of time reversal, the network device may modulate a data signal based on the time reversal vector sequence, and send a modulated signal to the terminal device.

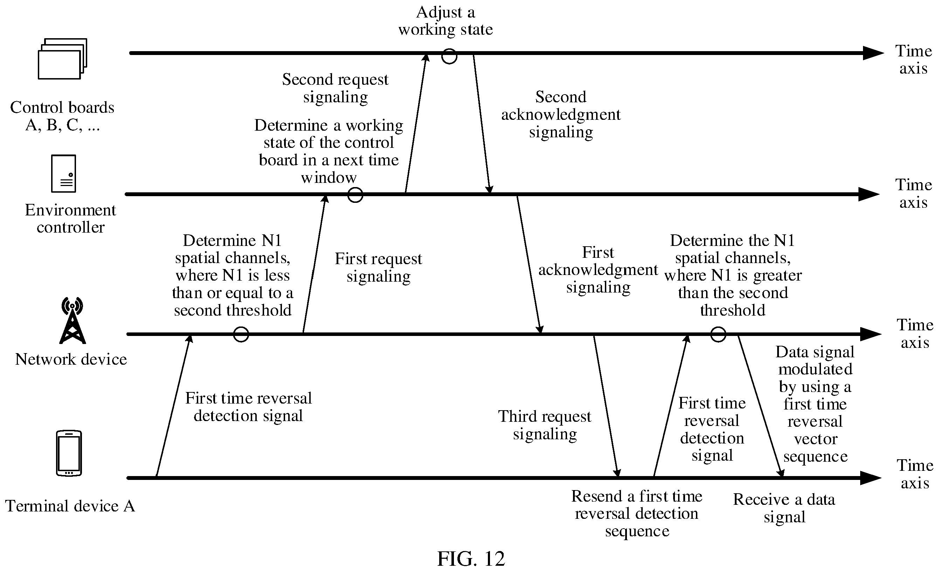

For example, when a network device communicates with a terminal device A, an environment controller is used to adjust a control board. FIG. 12 is a schematic diagram of a process in which the network device adjusts a control board according to an embodiment of this application.

S1201: The terminal device A sends a first time reversal detection signal to the network device, and the network device receives first time reversal detection signals from the terminal device in M spatial channels from an X direction, a Y direction, and a Z direction.

A first time reversal detection sequence carried by the first time reversal detection signal may be a ZC sequence or a Dirichlet unit pulse sequence.

S1202: The network device determines N1 spatial channels in the M spatial channels based on the first time reversal detection signals. If a quantity of N1 is less than or equal to a second threshold, S1203 is performed; or if a quantity of N1 is greater than a second threshold, S1209 is performed.

S1203: The network device sends first request signaling (1st request) to the environment controller, where the first request signaling is used to request the environment controller to adjust a multipath parameter of the terminal device A.

Specifically, the first request signaling may carry an identifier of the terminal device A, an identifier of the network device, a quantity of existing multipaths between the terminal device A and the network device (namely, a quantity N1 of spatial channels determined by the network device), a quantity of desired multipaths between the terminal device A and the network device, and the like. The first request signaling may further include information such as an amount of data that is expected to be sent between the network device and the terminal device A, and required quality of service (quality of service, QoS).

S1204: The environment controller sends second request signaling (2nd request) to one or more control boards, where the second request signaling is used to adjust a working state of the one or more control boards.

The environment controller may pre-store prior information, for example, locations of walls and obstacles in a production workshop, a location of the control board, a location of the terminal device A, and a location of the network device, of a propagation environment in which the network device and the terminal device A are located. After the environment controller receives the first request signaling, the environment controller may obtain, based on the first request signaling, the identifier of the terminal device A, the identifier of the network device, the quantity of existing multipaths between the terminal device A and the network device, the quantity of desired multipaths between the terminal device A and the network device, and the like. With reference to the prior information, the environment controller may determine a working state of the control board in a next time window. For one or more control boards whose working state needs to be changed, the environment controller may separately send the second request signaling to the one or more control boards whose working state needs to be changed. For the second request signaling sent to one control board, the second request signaling may include a time interval of the next time window, and the working state, for example, one or more of a location, a state of actively reflecting a signal, or a state of passively reflecting a signal, of the control board in the next time window.

S1205: The control board adjusts the working state based on the second request signaling, and after the adjustment is completed, the control board may send second acknowledgment signaling (2nd ACK) to the environment controller.

The second acknowledgment signaling may include an identifier of the control board.

S1206: After receiving the second acknowledgment signaling from the control board, the environment controller sends first acknowledgment signaling (1st ACK) to the network device, where the first acknowledgment signaling indicates that the control board completes the adjustment.

To shorten waiting time and a communication delay, the environment controller may send the first acknowledgment signaling to the network device without waiting for receiving second acknowledgment signaling of all control boards whose working states need to be adjusted. For example, after receiving the first acknowledgment sent by a specific quantity of control boards, the environment controller may directly send the first acknowledgment signaling to the network device without waiting for second acknowledgment signaling sent by the remaining control boards. The specific quantity of control boards may be one half, three fourths, or the like of a quantity of control boards to which the network device sends the second request signaling.

In some implementations, the environment controller may further send, without waiting for the second acknowledgment signaling of the control board, the first acknowledgment signaling to the network device after a preset waiting duration threshold is exceeded after the environment controller sends the second request signaling to the one or more control boards.

S1207: After the network device receives the first acknowledgment signaling from the environment controller, the network device sends third request signaling (3rd Request) to the terminal device A, where the third request signaling indicates to resend the time reversal detection signal.

The third request signaling may carry an indicator for resending the time reversal detection signal, and may further carry an identifier of the terminal device A.

S1208: After the terminal device A receives the third request signaling from the network device, the terminal device resends the first time reversal detection signal. The network device receives the first time reversal detection signal, and returns to S1202.

S1209: The network device modulates a data signal based on N1 first time reversal vector sequences, and sends a modulated data signal to the terminal device A through the N1 spatial channels.

The N1 time reversal vector sequences are determined by the network device based on first time reversal detection signals received in the N1 spatial channels from the X direction, the Y direction, and the Z direction.

S1210: The terminal device receives the data signal from the network device.

The foregoing describes how the network device adjusts the one or more control boards by using an example in which the network device adjusts the working state of the one or more control boards by using the environment controller during uplink communication In some implementations, a function of the environment controller may alternatively be implemented by the network device, that is, the network device may directly adjust the working state of the one or more control boards without using the environment controller.

It may be understood that, during downlink communication, if the terminal device determines that a quantity of spatial channels for communication with the network device is insufficient, the terminal device may also notify the network device of information such as the identifier of the terminal device A, the identifier of the network device, the quantity of existing multipaths between the terminal device A and the network device (namely, the quantity N1 of spatial channels determined by the network device), and the quantity of desired multipaths between the terminal device A and the network device, and the network device performs a function of adjusting the working state of the one or more control boards in FIG. 12.

For a case of sidelink communication between terminal devices (for example, D2D communication), a cluster head node may be further selected to implement a function of adjusting a working state of one or more control boards by a network device.

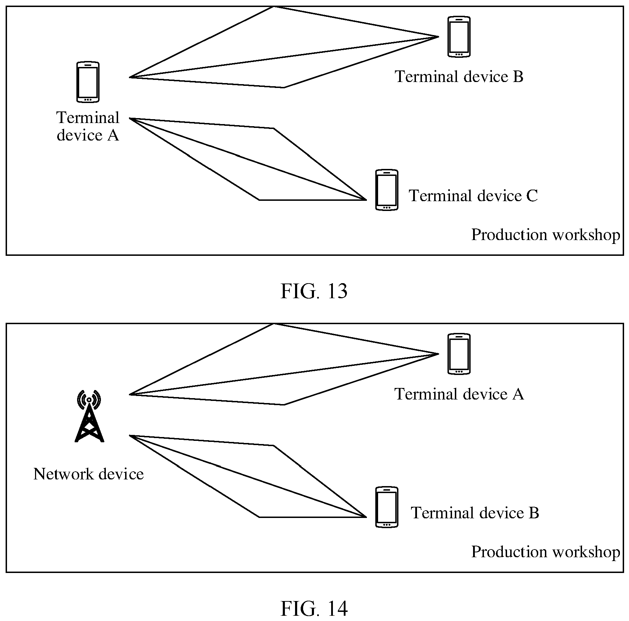

A D2D communication cluster that includes a terminal device A, a terminal device B, and a terminal device C shown in FIG. 13 is used as an example. The D2D communication cluster selecting a cluster head node may include the following steps.

(1) The terminal device A, the terminal device B, and the terminal device C may select a D2D cluster head node through control channel interaction and negotiation. For example, the terminal device A becomes the cluster head node.

(2) The cluster head node establishes a communication link with an environment controller, and registers a cluster head identifier of the cluster head node with the environment controller.

(3) The cluster head node sends broadcast signaling to all other terminal devices to indicate the cluster head identifier of the cluster head node.

(4) When the terminal device B and the terminal device C find that a quantity of multipaths (a quantity of spatial channels) is insufficient when performing time reversal-based communication, the terminal device B and the terminal device C may notify the cluster head node of spatial location information of the terminal device B and the terminal device C and the current quantity of multipaths (the quantity of spatial channels), and then the cluster head node performs a function of adjusting a control board in FIG. 12, to assist the terminal device B and the terminal device C in completing multipath adjustment and communication performance improvement.

(5) When the cluster head node fails or leaves, the remaining nodes repeat the step in (1) to select a new D2D cluster head node.

In some implementations, when the network device communicates with a plurality of terminal devices based on time reversal, precoding codebooks (or matrices) used by the plurality of terminal devices may be orthogonal to each other to reduce interference between the terminal devices.

As shown in FIG. 14, an example in which a production workshop includes one network device and a plurality of terminal devices (a terminal device A and a terminal device B), and when the network device communicates with the plurality of terminal devices based on time reversal, different precoding codebooks are used for the plurality of terminal devices to reduce interference between the terminal devices is used for description.

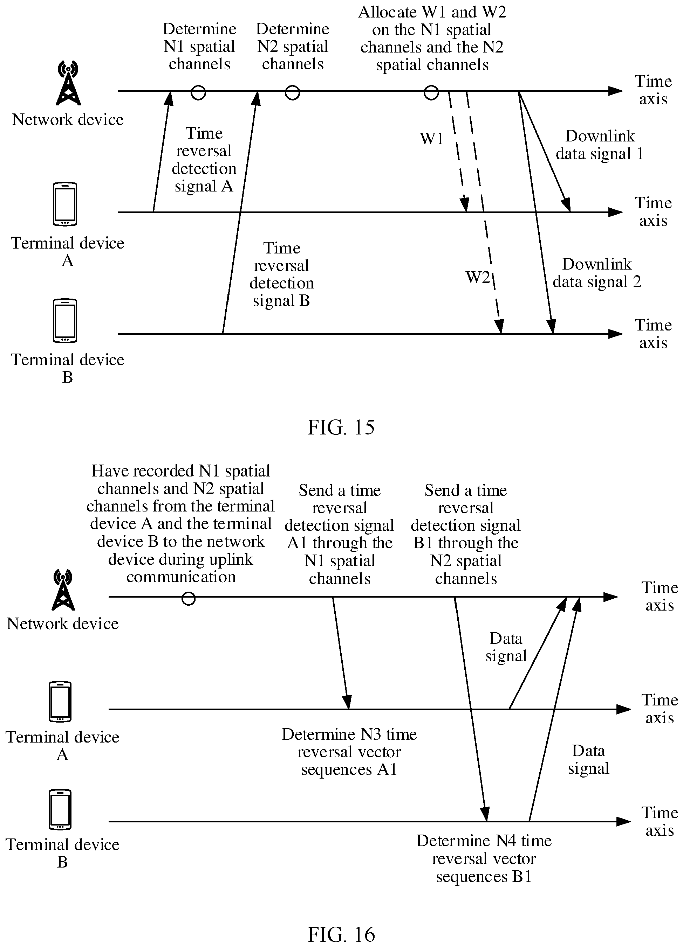

FIG. 15 is a schematic diagram of a process in which the network device communicates with the plurality of terminal devices based on time reversal. The process may include the following steps.

S1501: The terminal device A sends a time reversal detection signal A to the network device, and the network device receives time reversal detection signals A from the terminal device A in M spatial channels from an X direction, a Y direction, and a Z direction.

S1502: The network device determines N1 spatial channels in the M spatial channels based on the time reversal detection signals A.

In addition, the network device may further determine N1 time reversal vector sequences A based on the time reversal detection signals A received in the N1 spatial channels from the X direction, the Y direction, and the Z direction.

S1503: The terminal device B sends a time reversal detection signal B to the network device, and the network device receives time reversal detection signals B from the terminal device B in the M spatial channels from the X direction, the Y direction, and the Z direction.

S1504: The network device determines N2 spatial channels in the M spatial channels based on the time reversal detection signals B.

In addition, the network device may further determine N2 time reversal vector sequences B based on the time reversal detection signals B received in the N2 spatial channels from the X direction, the Y direction, and the Z direction.

S1505: The network device separately allocates, on the N1 spatial channels and the N2 spatial channels, a precoding codebook W1 to the terminal device A, and a precoding codebook W2 to the terminal device B.

The network device may send information about allocating the precoding codebook W1 to the terminal device A and allocating the precoding codebook W2 to the terminal device B to the terminal device A and the terminal device B by using downlink control information or the like.

S1506: The network device modulates, based on the N1 time reversal vector sequences A and the precoding codebook W1, a downlink data signal 1 (downlink data 1) to be sent to the terminal device A, and sends a modulated downlink data signal 1 to the terminal device A through the N1 spatial channels; and modulates, based on the N2 time reversal detection signals B and the precoding codebook W2, a downlink data signal 2 (downlink data 2) to be sent to the terminal device, and sends a modulated downlink data signal 2 through the N2 spatial channels.

In a possible implementation, to ensure orthogonality of the precoding codebooks used between the plurality of terminal devices, the precoding codebook W1 allocated to the terminal device A and the precoding codebook W2 allocated to the terminal device B may be determined based on the N1 spatial channels used for communication between the network device and the terminal device A and the N2 spatial channels used for communication between the network device and the terminal device B.

For example, the N1 spatial channels form a spatial channel subset S1, and the N2 spatial channels form a spatial channel subset S2. For an intersection $\hat{S} = S1 \cap S2$ of S1 and S2, if a quantity of spatial channels included in the intersection is 0, that is, $|\hat{S}| = 0$, the network device may make $W1 = \mathbb{I}_m, W2 = \mathbb{I}_n$ , and m = |S1|, n = |S2|, where |S1| represents a quantity of spatial channels included in S1, and similarly, |S2| represents a quantity of spatial channels included in S1. $\mathbb{I}_m$ represents a unit matrix of m rows and m columns. The so-called unit matrix is a square matrix. Elements on the diagonal from the upper left corner to the lower right corner are all 1, and the other elements are all 0.

If $|\hat{S}| \neq 0$, m = |S1|, n = |S2|, k = $|\hat{S}|$, the time reversal vector sequence A obtained by the network device from the terminal device A through spatial channels that belong to the intersection $|\hat{S}|$ is denoted as $\vec{Y}_A[-n]$, a sequence length is denoted as $L_A$, the time reversal vector sequence B obtained from the terminal device B through spatial channels that belong to the intersection $|\hat{S}|$ is denoted as $\vec{Y}_B[-n]$, and a sequence length is denoted as $L_B$. If the time reversal detection signal A is a Dirichlet unit pulse sequence signal, a channel response matrix $H_A$ is obtained by using formula (1); or if the time reversal detection signal is a ZC sequence signal, a channel response matrix $H_A$ is obtained by using formula (2). A channel response matrix $H_B$ may also be obtained by using the same method. Then, a precoding matrix K1 of the terminal device A is obtained by using formula (3), and a precoding matrix K2 of the terminal device B is obtained by using formula (4).

$$H_A = \frac{1}{L_A} \sum_{n=1}^{L_A} \vec{Y}_A[n] \qquad (1)$$

$$H_A = \frac{1}{L_A} \sum_{n=1}^{L_A} \frac{\vec{Y}_A[n]}{x_u[n]} \qquad (2)$$

$$K1 = (\mathbb{I}_k - H_B(H_B^H H_B)^{-1} H_B^H) H_A \qquad (3)$$

$$K2 = (\mathbb{I}_k - H_A(H_A^H H_A)^{-1} H_A^H) H_B \qquad (4)$$

$H_A^H$ represents a conjugate transposition matrix of $H_A$. $(H)^{-1}$ represents an inverse matrix of $H$. $\mathbb{I}_k$ represents a unit matrix whose quantities of rows and columns are both k.

After the intersections K1 and K2 are obtained, a precoding matrix W1 of the terminal device A is obtained by using formula (5), and a precoding matrix W2 of the terminal device B is obtained by using formula (6).

$$W1 = \begin{bmatrix} \mathbb{I}_{m-k} \\ K1 \end{bmatrix} \qquad (5)$$

$$W2 = \begin{bmatrix} \mathbb{I}_{n-k} \\ K2 \end{bmatrix} \qquad (6)$$

In addition, when the plurality of terminal devices (the terminal device A and the terminal device B) simultaneously perform uplink communication with the network device, the network device may alternatively send a time reversal detection signal to any terminal device based on a spatial channel determined during downlink communication, to further reduce power consumption of a radio frequency link of the network device, reduce signal interference between the plurality of terminal devices, and improve precision of channel estimation performed by each terminal device by using a time reversal detection signal.

For example, for a terminal device A, a network device determines, in M spatial channels, N1 spatial channels for communication with the terminal device A; and for a terminal device B, the network device determines, in the M spatial channels, N2 spatial channels for communication with the terminal device B, where the N1 spatial channels correspond to N1 time reversal vector sequences A, and the N2 spatial channels correspond to N2 time reversal vector sequences B. As shown in FIG. 16, when the terminal device A and the terminal device B send data signals to the network device, the following steps are performed.

S1601: The network device modulates a time reversal detection signal A1 based on the N1 time reversal vector sequences A, and sends a modulated time reversal detection signal A1 to the terminal device A through the N1 spatial channels.

S1602: The terminal device A receives the time reversal detection signal A1, and determines N3 spatial channels for communication with the network device and N3 time reversal vector sequences A1.

S1603: The network device modulates a time reversal detection signal B1 based on the N2 time reversal vector sequences B, and sends a modulated time reversal detection signal B1 to the terminal device B through the N2 spatial channels.

S1604: The terminal device B receives the time reversal detection signal B1, and determines N4 spatial channels for communication with the network device and N4 time reversal vector sequences B1.

S1605: The terminal device A and the terminal device B modulate, based on N1 time reversal vector sequences A1 and N2 time reversal vector sequences B1, data signals respectively to be sent to the network device, and send modulated data signals to the network device through the N3 spatial channels and the N4 spatial channels.

It may be understood that, to implement the functions in the foregoing embodiments, the first device and the second device include corresponding hardware structures and/or software modules for performing the functions. A person skilled in the art should be easily aware that, in combination with the units and the method steps in the examples described in embodiments disclosed in this application, this application can be implemented by using hardware or a combination of hardware and computer software. Whether a function is performed by using hardware or hardware driven by computer software depends on a particular application scenario and design constraint of the technical solutions.

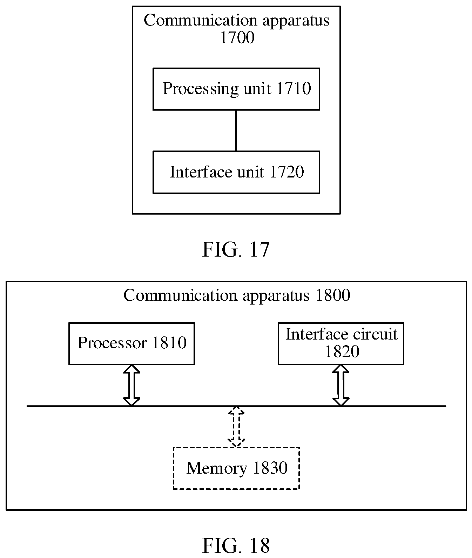

FIG. 17 and FIG. 18 each are a schematic diagram of a structure of a possible communication apparatus according to an embodiment of this application. These communication apparatuses may be configured to implement functions of the first device or the second device in the foregoing method embodiments, and therefore can also implement beneficial effects of the foregoing method embodiments. In a possible implementation, the communication apparatus may be one of the terminal devices 120a to 120j shown in FIG. 1, or may be the network device 110a or 110b shown in FIG. 1, or may be a module (for example, a chip) used in a terminal device or a network device.

As shown in FIG. 17, the communication apparatus 1700 includes a processing unit 1710 and an interface unit 1720. The communication apparatus 1700 may be configured to implement functions of the first device or the second device in the method embodiment shown in FIG. 5.

When the communication apparatus 1700 is configured to implement the functions of the first device in the method embodiment shown in FIG. 5:

the interface unit 1720 is configured to receive first time reversal detection signals from a second device in M spatial channels from a first direction, a second direction, and a third direction, where M is a quantity of spatial channels on which the communication apparatus 1700 can work, the first direction, the second direction, and the third direction are perpendicular to each other, and M is a positive integer;

the processing unit 1710 is configured to determine N1 spatial channels in the M spatial channels based on the first time reversal detection signals, where N1 is a positive integer less than or equal to M; and

the interface unit 1720 is further configured to communicate with the second device through the N1 spatial channels based on N1 first time reversal vector sequences, where the N1 first time reversal vector sequences are determined by the interface unit 1720 based on the first time reversal detection signals received in the N1 spatial channels from the first direction, the second direction, and the third direction.

In a possible design, energy of the first time reversal detection signals received through the N1 spatial channels is greater than or equal to a first threshold.

In a possible design, when receiving the first time reversal detection signals from the second device in the M spatial channels from the first direction, the second direction, and the third direction, the interface unit 1720 is specifically configured to receive, in the M spatial channels, the first time reversal detection signals from the first direction by using a horizontal electric dipole, from the second direction by using a vertical electric dipole, and from the third direction by using a flux ring.

In a possible design, the horizontal electric dipole and the vertical electric dipole are vertically crossed, and the flux ring surrounds a periphery of the horizontal electric dipole and a periphery of the vertical electric dipole.

In a possible design, the interface unit 1720 is further configured to receive second time reversal detection signals from the second device in the N1 spatial channels from the first direction, the second direction, and the third direction. The processing unit 1710 is further configured to update the N1 first time reversal vector sequences based on N1 second time reversal vector sequences and a weighting factor, where the N1 second time reversal vector sequences are determined by the interface unit 1720 based on the second time reversal detection signals received in the N1 spatial channels from the first direction, the second direction, and the third direction.

In a possible design, when communicating with the second device based on the N1 first time reversal vector sequences through the N1 spatial channels, the interface unit 1720 is specifically configured to send a first data signal and a third time reversal detection signal to the second device based on the N1 first time reversal vector sequences through the N1 spatial channels.

In a possible design, the first data signal and the third time reversal detection signal are in a same radio frame.

In a possible design, the processing unit 1710 is further configured to adjust a working state of one or more control boards when N1 is less than or equal to a second threshold.

In a possible design, the interface unit 1720 is further configured to: receive first indication information from the second device, where the first indication information indicates that a spatial location of the second device changes, and/or a received signal-to-noise ratio of communication between the second device and the communication apparatus 1700 is lower than a third threshold; and receive second time reversal detection signals from the second device in the M spatial channels from the first direction, the second direction, and the third direction. The processing unit 1710 is further configured to determine N2 spatial channels in the M spatial channels based on the second time reversal detection signals, where N2 is a positive integer less than or equal to M. The interface unit 1720 is further configured to communicate with the second device through the N2 spatial channels based on N2 second time reversal vector sequences, where the N2 second time reversal vector sequences are determined by the interface unit 1720 based on the second time reversal detection signals received in the N2 spatial channels from the first direction, the second direction, and the third direction.

In a possible design, the processing unit 1710 is further configured to: determine N3 spatial channels that are an intersection between the N2 spatial channels and the N1 spatial channels; and update, based on N3 first time reversal vector sequences corresponding to the N3 spatial channels and a weighting factor, N3 second time reversal vector sequences corresponding to the N3 spatial channels.

In a possible design, the interface unit 1720 is further configured to: receive first indication information from the second device, where the first indication information indicates that a received signal-to-noise ratio of communication between the second device and the communication apparatus 1700 is less than a third threshold; and receive second time reversal detection signals from the second device in N2 spatial channels from the first direction, the second direction, and the third direction, where the N2 spatial channels include the N1 spatial channels, N2 is greater than N1, and N2 is a positive integer less than or equal to M.

The interface unit 1720 is further configured to communicate with the second device through the N2 spatial channels based on N2 second time reversal vector sequences, where the N2 second time reversal vector sequences are determined by the interface unit 1720 based on the second time reversal detection signals received in the N2 spatial channels from the first direction, the second direction, and the third direction.

In a possible design, the processing unit 1710 is further configured to update, based on the N1 first time reversal vector sequences corresponding to the N1 spatial channels and a weighting factor, N1 second time reversal vector sequences corresponding to the N1 spatial channels.

In a possible design, the communication apparatus 1700 is a network device, and the second device is a terminal device; the communication apparatus 1700 is a terminal device, and the second device is a network device; or the communication apparatus 1700 is a first terminal device, and the second device is a second terminal device.

When the communication apparatus 1700 is configured to implement the functions of the second device in the method embodiment shown in FIG. 5:

the interface unit 1720 is configured to send a first time reversal detection signal to a first device. When the processing unit 1710 determines that a first condition is met, the interface unit 1720 sends a second time reversal detection signal to the first device.

The first condition includes one or more of the following: a spatial location of the communication apparatus 1700 changes; a received signal-to-noise ratio of communication between the communication apparatus 1700 and the first device is less than a third threshold; or duration after the communication apparatus 1700 sends the first time reversal detection signal reaches one time reversal detection signal sending cycle.

In a possible design, the interface unit 1720 is further configured to send first indication information to the first device, where the first indication information indicates the first condition that is met when the communication apparatus 1700 sends the second time reversal detection signal.

In a possible design, the first device is a network device, and the communication apparatus 1700 is a terminal device; the first device is a terminal device, and the communication apparatus 1700 is a network device; or the first device is a first terminal device, and the communication apparatus 1700 is a second terminal device.

As shown in FIG. 18, the communication apparatus 1800 includes a processor 1810 and an interface circuit 1820. The processor 1810 and the interface circuit 1820 are coupled to each other. It may be understood that the interface circuit 1820 may be a transceiver or an input/output interface. Optionally, the communication apparatus 1800 may further include a memory 1830, configured to store instructions executed by the processor 1810, or input data required by the processor 1810 to run the instructions, or data generated after the processor 1810 runs the instructions. Optionally, the memory 1830 may be further integrated with the processor 1810.

When the communication apparatus 1800 is configured to implement the method shown in FIG. 5, the processor 1810 is configured to implement the function of the processing unit 1710, and the interface circuit 1820 is configured to implement the function of the interface unit 1720.

When the communication apparatus is a chip used in a terminal device, the chip in the terminal device implements the functions of the terminal device in the foregoing method embodiments. The chip in the terminal device receives information from another module (for example, a radio frequency module or an antenna) in the terminal device, where the information is sent by a network device or another terminal device to the terminal device; or the chip in the terminal device sends information to another module (for example, a radio frequency module or an antenna) in the terminal device, where the information is sent by the terminal device to a network device or another terminal device.

When the communication apparatus is a module used in a network device, the module in the network device implements a function of the network device in the foregoing method embodiments. The module in the network device receives information from another module (for example, a radio frequency module or an antenna) in the network device, where the information is sent by a terminal device to the network device. Alternatively, the module in the network device sends information to another module (for example, a radio frequency module or an antenna) in the network device, where the information is sent by the network device to a terminal device. The network device module herein may be a baseband chip of the network device, or may be a DU or another module. The DU herein may be a DU in an open radio access network (open radio access network, O-RAN) architecture.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general purpose processor may be a microprocessor or any regular processor or the like.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a network device or a terminal device. Certainly, the processor and the storage medium may alternatively exist as discrete components in a network device or a terminal device.

All or a part of the foregoing embodiments may be implemented by using software, hardware, firmware, or any combination thereof. When software is used to implement embodiments, all or a part of embodiments may be implemented in a form of a computer program product. The computer program product includes one or more computer programs and instructions. When the computer programs or instructions are loaded and executed on a computer, all or a part of the procedures or functions in embodiments of this application are executed. The computer may be a general-purpose computer, a dedicated computer, a computer network, a network device, user equipment, or another programmable apparatus. The computer programs or instructions may be stored in a computer-readable storage medium, or may undergo transmission from a computer-readable storage medium to another computer-readable storage medium. For example, the computer programs or instructions may undergo transmission from a website, computer, server, or data center to another website, computer, server, or data center in a wired or wireless manner. The computer-readable storage medium may be any usable medium that can be accessed by a computer, or a data storage device, such as a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In addition, it should be understood that the term "for example" in embodiments of this application is used to represent giving an example, an illustration, or a description. Any embodiment or design scheme described as an "example" in this application should not be explained as being more preferred or having more advantages than another embodiment or design scheme. Exactly, the term "example" is used to present a concept in a specific manner.

In addition, in embodiments of this application, information (information), a signal (signal), a message (message), and a channel (channel) may be interchangeably used sometimes. It should be noted that meanings expressed by the terms are consistent when differences are not emphasized. Terms "of (of)" and "corresponding (corresponding, relevant)" may be interchangeably used sometimes. It should be noted that meanings expressed by the terms are consistent when differences of the terms are not emphasized.

It may be understood that various numbers in embodiments of this application are merely used for differentiation for ease of description, and are not used to limit the scope of embodiments of this application. The sequence numbers of the foregoing processes do not mean execution sequences, and the execution sequences of the processes should be determined based on functions and internal logic of the processes.

**Claims**

1. A time reversal-based communication method, comprising:

receiving, by a first device, first time reversal detection signals from a second device in M spatial channels from a first direction, a second direction, and a third direction, wherein M is a quantity of spatial channels on which the first device is capable of working, the first direction, the second direction, and the third direction are perpendicular to each other, and M is a positive integer;

determining, by the first device, N1 spatial channels in the M spatial channels based on the first time reversal detection signals, wherein N1 is a positive integer less than or equal to M; and

communicating, by the first device, with the second device based on N1 first time reversal vector sequences through the N1 spatial channels, wherein the N1 first time reversal vector sequences are determined by the first device based on the first time reversal detection signals received in the N1 spatial channels from the first direction, the second direction, and the third direction.

2. The method according to claim 1, wherein energy of the first time reversal detection signals received through the N1 spatial channels is greater than or equal to a first threshold.

3. The method according to claim 1 or 2, wherein the receiving, by a first device, first time reversal detection signals from a second device in M spatial channels from a first direction, a second direction, and a third direction comprises:

receiving, by the first device in the M spatial channels, the first time reversal detection signals from the first direction by using a horizontal electric dipole, from the second direction by using a vertical electric dipole, and from the third direction by using a flux ring.

4. The method according to claim 3, wherein the horizontal electric dipole and the vertical electric dipole are vertically crossed, and the flux ring surrounds a periphery of the horizontal electric dipole and a periphery of the vertical electric dipole.

5. The method according to any one of claims 1 to 4, wherein the method further comprises:

receiving, by the first device, second time reversal detection signals from the second device in the N1 spatial channels from the first direction, the second direction, and the third direction; and

updating, by the first device, the N1 first time reversal vector sequences based on N1 second time reversal vector sequences and a weighting factor, wherein the N1 second time reversal vector sequences are determined by the first device based on the second time reversal detection signals received in the N1 spatial channels from the first direction, the second direction, and the third direction.

6. The method according to any one of claims 1 to 5, wherein the communicating, by the first device, with the second device based on N1 first time reversal vector sequences through the N1 spatial channels comprises:

sending, by the first device, a first data signal and a third time reversal detection signal to the second device based on the N1 first time reversal vector sequences through the N1 spatial channels.

7. The method according to claim 6, wherein the first data signal and the third time reversal detection signal are in a same radio frame.

8. The method according to any one of claims 1 to 7, wherein the method further comprises:

adjusting, by the first device, a working state of one or more control boards when N1 is less than or equal to a second threshold.

9. The method according to any one of claims 1 to 4, wherein the method further comprises:

receiving, by the first device, first indication information from the second device, wherein the first indication information indicates that a spatial location of the second device changes, and/or a received signal-to-noise ratio of communication between the second device and the first device is less than a third threshold;

receiving, by the first device, second time reversal detection signals from the second device in the M spatial channels from the first direction, the second direction, and the third direction;

determining, by the first device, N2 spatial channels in the M spatial channels based on the second time reversal detection signals, wherein N2 is a positive integer less than or equal to M; and

communicating, by the first device, with the second device based on N2 second time reversal vector sequences through the N2 spatial channels, wherein the N2 second time reversal vector sequences are determined by the first device based on the second time reversal detection signals received in the N2 spatial channels from the first direction, the second direction, and the third direction.

10. The method according to claim 9, wherein the method further comprises:

determining, by the first device, N3 spatial channels that are an intersection between the N2 spatial channels and the N1 spatial channels; and

updating, by the first device based on N3 first time reversal vector sequences corresponding to the N3 spatial channels and a weighting factor, N3 second time reversal vector sequences corresponding to the N3 spatial channels.

11. The method according to any one of claims 1 to 4, wherein the method further comprises:

receiving, by the first device, first indication information from the second device, wherein the first indication information indicates that a received signal-to-noise ratio of communication between the second device and the first device is less than a third threshold;

receiving, by the first device, second time reversal detection signals from the second device in N2 spatial channels from the first direction, the second direction, and the third direction, wherein the N2 spatial channels comprise the N1 spatial channels, N2 is greater than N1, and N2 is a positive integer less than or equal to M; and

communicating, by the first device, with the second device based on N2 second time reversal vector sequences through the N2 spatial channels, wherein the N2 second time reversal vector sequences are determined by the first device based on the second time reversal detection signals received in the N2 spatial channels from the first direction, the second direction, and the third direction.

12. The method according to claim 11, wherein the method further comprises:
updating, by the first device based on the N1 first time reversal vector sequences corresponding to the N1 spatial channels and a weighting factor, N1 second time reversal vector sequences corresponding to the N1 spatial channels.

13. The method according to any one of claims 1 to 12, wherein the first device is a network device, and the second device is a terminal device;

the first device is a terminal device, and the second device is a network device; or
the first device is a first terminal device, and the second device is a second terminal device.

14. A time reversal-based communication method, comprising:

sending, by a second device, a first time reversal detection signal to a first device; and
sending, by the second device, a second time reversal detection signal to the first device when a first condition is met, wherein
the first condition comprises one or more of the following:

a spatial location of the second device changes;
a received signal-to-noise ratio of communication between the second device and the first device is less than a third threshold; or
duration after the second device sends the first time reversal detection signal reaches one time reversal detection signal sending cycle.

15. The method according to claim 14, wherein the method further comprises:
sending, by the second device, first indication information to the first device, wherein the first indication information indicates the first condition that is met when the second device sends the second time reversal detection signal.

16. The method according to claim 14 or 15, wherein the first device is a network device, and the second device is a terminal device;

the first device is a terminal device, and the second device is a network device; or
the first device is a first terminal device, and the second device is a second terminal device.

17. A communication apparatus, comprising an interface unit and a processing unit, wherein

the interface unit is configured to receive first time reversal detection signals from a second device in M spatial channels from a first direction, a second direction, and a third direction, wherein M is a quantity of spatial channels on which the communication apparatus is capable of working, the first direction, the second direction, and the third direction are perpendicular to each other, and M is a positive integer;

the processing unit is configured to determine N1 spatial channels in the M spatial channels based on the first time reversal detection signals, wherein N1 is a positive integer less than or equal to M; and

the interface unit is further configured to communicate with the second device through the N1 spatial channels based on N1 first time reversal vector sequences, wherein the N1 first time reversal vector sequences are determined by the interface unit based on the first time reversal detection signals received in the N1 spatial channels from the first direction, the second direction, and the third direction.

18. The apparatus according to claim 17, wherein energy of the first time reversal detection signals received through the N1 spatial channels is greater than or equal to a first threshold.

19. The apparatus according to claim 17 or 18, wherein when receiving the first time reversal detection signals from the second device in the M spatial channels from the first direction, the second direction, and the third direction, the interface unit is specifically configured to receive, in the M spatial channels, the first time reversal detection signals from the first direction by using a horizontal electric dipole, from the second direction by using a vertical electric dipole, and from the third direction by using a flux ring.

20. The apparatus according to claim 19, wherein the horizontal electric dipole and the vertical electric dipole are vertically crossed, and the flux ring surrounds a periphery of the horizontal electric dipole and a periphery of the vertical electric dipole.

21. The apparatus according to any one of claims 17 to 20, wherein the interface unit is further configured to receive second time reversal detection signals from the second device in the N1 spatial channels from the first direction, the second direction, and the third direction; and

the processing unit is further configured to update the N1 first time reversal vector sequences based on N1 second time reversal vector sequences and a weighting factor, wherein the N1 second time reversal vector sequences are determined by the interface unit based on the second time reversal detection signals received in the N1 spatial channels from the first direction, the second direction, and the third direction.

22. The apparatus according to any one of claims 17 to 21, wherein when communicating with the second device based on the N1 first time reversal vector sequences through the N1 spatial channels, the interface unit is specifically configured to send a first data signal and a third time reversal detection signal to the second device based on the N1 first time reversal vector sequences through the N1 spatial channels.

23. The apparatus according to claim 22, wherein the first data signal and the third time reversal detection signal are in a same radio frame.

24. The apparatus according to any one of claims 17 to 23, wherein the processing unit is further configured to adjust a working state of one or more control boards when N1 is less than or equal to a second threshold.

25. The apparatus according to any one of claims 17 to 20, wherein the interface unit is further configured to: receive first indication information from the second device, wherein the first indication information indicates that a spatial location of the second device changes, and/or a received signal-to-noise ratio of communication between the second device and the communication apparatus is lower than a third threshold; and receive second time reversal detection signals from the second device in the M spatial channels from the first direction, the second direction, and the third direction;

the processing unit is further configured to determine N2 spatial channels in the M spatial channels based on the second time reversal detection signals, wherein N2 is a positive integer less than or equal to M; and

the interface unit is further configured to communicate with the second device through the N2 spatial channels based on N2 second time reversal vector sequences, wherein the N2 second time reversal vector sequences are determined by the interface unit based on the second time reversal detection signals received in the N2 spatial channels from the first direction, the second direction, and the third direction.

26. The apparatus according to claim 25, wherein the processing unit is further configured to: determine N3 spatial channels that are an intersection between the N2 spatial channels and the N1 spatial channels; and update, based on N3 first time reversal vector sequences corresponding to the N3 spatial channels and a weighting factor, N3 second time reversal vector sequences corresponding to the N3 spatial channels.

**27.** The apparatus according to any one of claims 17 to 20, wherein the interface unit is further configured to: receive first indication information from the second device, wherein the first indication information indicates that a received signal-to-noise ratio of communication between the second device and the communication apparatus is less than a third threshold; and receive second time reversal detection signals from the second device in N2 spatial channels from the first direction, the second direction, and the third direction, wherein the N2 spatial channels comprise the N1 spatial channels, N2 is greater than N1, and N2 is a positive integer less than or equal to M; and
the interface unit is further configured to communicate with the second device through the N2 spatial channels based on N2 second time reversal vector sequences, wherein the N2 second time reversal vector sequences are determined by the interface unit based on the second time reversal detection signals received in the N2 spatial channels from the first direction, the second direction, and the third direction.

**28.** The apparatus according to claim 27, wherein the processing unit is further configured to update, based on the N1 first time reversal vector sequences corresponding to the N1 spatial channels and a weighting factor, N1 second time reversal vector sequences corresponding to the N1 spatial channels.

**29.** The apparatus according to any one of claims 17 to 28, wherein the communication apparatus is a network device, and the second device is a terminal device;

the communication apparatus is a terminal device, and the second device is a network device; or
the communication apparatus is a first terminal device, and the second device is a second terminal device.

**30.** A communication apparatus, comprising an interface unit and a processing unit, wherein

the interface unit is configured to send a first time reversal detection signal to a first device; and
when the processing unit determines that a first condition is met, the interface unit sends a second time reversal detection signal to the first device, wherein
the first condition comprises one or more of the following:

a spatial location of the communication apparatus changes;
a received signal-to-noise ratio of communication between the communication apparatus and the first device is less than a third threshold; or
duration after the communication apparatus sends the first time reversal detection signal reaches one time reversal detection signal sending cycle.

**31.** The apparatus according to claim 30, wherein the interface unit is further configured to send first indication information to the first device, wherein the first indication information indicates the first condition that is met when the communication apparatus sends the second time reversal detection signal.

**32.** The apparatus according to claim 30 or 31, wherein the first device is a network device, and the communication apparatus is a terminal device;

the first device is a terminal device, and the communication apparatus is a network device; or
the first device is a first terminal device, and the communication apparatus is a second terminal device.

**33.** A communication apparatus, comprising a processor and an interface circuit, wherein the interface circuit is configured to receive a signal from another communication apparatus other than the communication apparatus and send the signal to the processor, or send a signal from the processor to another communication apparatus other than the communication apparatus; and the processor is configured to implement, by using a logic circuit or executing code instructions, the method according to any one of claims 1 to 13, or the method according to any one of claims 14 to 16.

**34.** A computer program product, comprising program code, wherein when the program code is executed, the method according to any one of claims 1 to 13 or the method according to any one of claims 14 to 16 is implemented.

**35.** A chip, wherein the chip is configured to implement the method according to any one of claims 1 to 13, or is configured to implement the method according to any one of claims 14 to 16.

**36.** A computer-readable storage medium, wherein the storage medium stores a computer program or instructions, and when the computer program or the instructions are executed, the method according to any one of claims 1 to 13 is implemented, or the method according to any one of claims 14 to 16 is implemented.

37. A communication system, wherein the system comprises a first device and a second device, the first device is configured to implement the method according to any one of claims 1 to 13, and the second device is configured to implement the method according to any one of claims 14 to 16.

FIG. 1

FIG. 2

Terminal device A
(IoT device)

Terminal device B
(AGV device)

Terminal device E
(office computer)

Terminal device C
(surveillance camera)

Terminal device D
(industrial robot arm)

Production workshop

FIG. 3

FIG. 4

First device | Second device

S501: The first device receives first time reversal detection signals from the second device in M spatial channels from a first direction, a second direction, and a third direction

S502: The first device determines N1 spatial channels in the M spatial channels based on the first time reversal detection signals

S503: The first device communicates with the second device based on N1 first time reversal vector sequences through the N1 spatial channels

FIG. 5

Network device

Terminal device

Production workshop

FIG. 6

FIG. 7

FIG. 8

Determine N1 second time
reversal vector sequences,
and update the N1 first time
reversal vector sequences
based on a weighting factor

N1 first time reversal
vector sequences

Network
device

Communicate
with the terminal
device based on
the N1 first time
reversal vector
sequences

Communicate
with the
terminal device
based on N1
updated first
time reversal
vector sequences

...

First time
reversal
detection
signal

Second time
reversal
detection
signal

Time
axis

Terminal
device

Time
axis

FIG. 9

Send a
modulated
data signal A
and a
modulated
time reversal
detection
signal B

Obtain data B,
determine a
time reversal
vector sequence
C, and update
the time
reversal vector
sequence A

Determine a
time
reversal
vector
sequence A

Send a modulated
data signal C and
a modulated time
reversal detection
signal D

Network
device

Time
axis

Time
axis

Terminal
device

Send a
time
reversal
detection
signal A

Obtain data A,
and determine
a time reversal
vector
sequence B

Send a
modulated data
signal B and a
modulated time
reversal
detection signal
C

Obtain data C,
determine a time
reversal vector
sequence D, and
update the time
reversal vector
sequence B

Time
reversal
detection
signal

Data
signal

FIG. 10

Control board A   Control board B   Control board C   Control board D

Network device

Environment controller

Terminal device

Production workshop

FIG. 11

FIG. 12

Terminal device B

Terminal
device A

Terminal device C

Production workshop

FIG. 13

Terminal device A

Network device

Terminal device B

Production workshop

FIG. 14

Determine N1 spatial channels    Determine N2 spatial channels    Allocate W1 and W2 on the N1 spatial channels and the N2 spatial channels

Network device

Time axis

Time reversal detection signal A

W1

Downlink data signal 1

Terminal device A

Time axis

Time reversal detection signal B

W2

Downlink data signal 2

Terminal device B

Time axis

FIG. 15

Have recorded N1 spatial channels and N2 spatial channels from the terminal device A and the terminal device B to the network device during uplink communication    Send a time reversal detection signal A1 through the N1 spatial channels    Send a time reversal detection signal B1 through the N2 spatial channels

Network device

Time axis

Data signal

Terminal device A

Time axis

Determine N3 time reversal vector sequences A1

Data signal

Terminal device B

Time axis

Determine N4 time reversal vector sequences B1

FIG. 16

Communication apparatus
1700

Processing unit 1710

Interface unit 1720

FIG. 17

Communication apparatus 1800

Processor 1810

Interface circuit
1820

Memory 1830

FIG. 18

## INTERNATIONAL SEARCH REPORT

| International application No. |
|---|
| **PCT/CN2022/125480** |

**A.  CLASSIFICATION OF SUBJECT MATTER**

H04B 17/30(2015.01)i

According to International Patent Classification (IPC) or to both national classification and IPC

**B.  FIELDS SEARCHED**

Minimum documentation searched (classification system followed by classification symbols)

H04B; H04L

Documentation searched other than minimum documentation to the extent that such documents are included in the fields searched

Electronic data base consulted during the international search (name of data base and, where practicable, search terms used)

CNPAT, CNKI, WPI, EPODOC, 3GPP: 时间, 反演, 探测, 信号, 空间, 通道, 方向, 垂直, 矢量, 序列, time, reversal, probe, signal, space, channel, direction, vertical, vector, sequence

**C.  DOCUMENTS CONSIDERED TO BE RELEVANT**

| Category* | Citation of document, with indication, where appropriate, of the relevant passages | Relevant to claim No. |
|---|---|---|
| A | CN 103763225 A (STATE KEY LABORATORY OF COMPLEX ELECTROMAGNETIC ENVIRONMENTAL EFFECTS ON ELECTRONICS & INFORMATION SYSTEM) 30 April 2014 (2014-04-30)<br>description, paragraphs [0045]-[0074] | 1-37 |
| A | CN 109120320 A (CHONGQING UNIVERSITY OF POSTS AND TELECOMMUNICATIONS) 01 January 2019 (2019-01-01)<br>entire document | 1-37 |
| A | CN 111107626 A (CHONGQING UNIVERSITY OF POSTS AND TELECOMMUNICATIONS) 05 May 2020 (2020-05-05)<br>entire document | 1-37 |
| A | CN 112068116 A (XIDIAN UNIVERSITY) 11 December 2020 (2020-12-11)<br>entire document | 1-37 |
| A | US 2017302339 A1 (ZIVA CORP.) 19 October 2017 (2017-10-19)<br>entire document | 1-37 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **18 November 2022** | **29 November 2022** |

| Name and mailing address of the ISA/CN | Authorized officer |
|---|---|
| **China National Intellectual Property Administration (ISA/ CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/125480**

| Patent document cited in search report | | | Publication date (day/month/year) | Patent family member(s) | Publication date (day/month/year) |
|---|---|---|---|---|---|
| CN | 103763225 | A | 30 April 2014 | None | |
| CN | 109120320 | A | 01 January 2019 | None | |
| CN | 111107626 | A | 05 May 2020 | None | |
| CN | 112068116 | A | 11 December 2020 | None | |
| US | 2017302339 | A1 | 19 October 2017 | None | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111335100